# EUROPÄISCHE PATENTSCHRIFT

(11) **EP 4 306 840 B1**
(45) Veröffentlichungstag und Bekanntmachung des Hinweises auf die Patenterteilung: **08.10.2025**
(21) Anmeldenummer: 23178434.9
(22) Anmeldetag: 09.06.2023
(51) Int. Cl.: F16N 25/02, F16N 7/38

(54) **PROGRESSIVVERTEILER IN LEICHTBAUWEISE MIT REDUZIERTEM TOTRAUMVOLUMEN**
LIGHT-WEIGHT PROGRESSIVE DISTRIBUTOR WITH REDUCED DEAD SPACE VOLUME
DISTRIBUTEUR PROGRESSIF DE CONSTRUCTION LÉGÈRE AVEC VOLUME MORT RÉDUIT

(30) Priorität: 06.07.2022 DE 102022116836
(43) Veröffentlichungstag der Anmeldung: 17.01.2024
(73) Patentinhaber: Eugen Woerner GmbH & Co. KG Zentralschmieranlagen, 97877 Wertheim (DE)
(72) Erfinder: Müller, Marcus, 97956 Werbach (DE); Moritzer, Elmar, 33175 Bad Lippspringe (DE); Scholle, Maximilian, 33106 Paderborn (DE)
(74) Vertreter: DREISS Patentanwälte PartG mbB

(56) Entgegenhaltungen:
- GB-A- 831 686
- US-A1- 2014 124 073
- US-A1- 2015 226 376

## Beschreibung

Schmiermittelverteiler werden zur Versorgung von Lagerstellen mit Schmierstoff, wie beispielsweise Druckmaschinen oder Windenergiekonverter, seit langem und mit gutem Erfolg eingesetzt. Die Begriffe Schmiermedium, Schmiermittel und Schmierstoff werden synonym gebraucht. Eine wesentliche Eigenschaft dieser Schmiermittelverteiler ist, dass nacheinander jeder Lagerstelle beziehungsweise Schmierstelle die vorgegebene Schmiermittelmenge, sei es Fett oder Öl, zugemessen wird. Erst wenn eine Schmierstelle mit einem konstruktiv vorgegebenen Schmierstoffvolumen versorgt wurde, wird die nächste Schmierstelle mit Schmiermittel versorgt. Wegen dieser nacheinander erfolgenden Zumessung des Schmiermittels werden diese Schmiermittelverteiler auch als "Progressivverteiler" bezeichnet.

Ihr Funktionsprinzip ist dem einschlägigen Fachmann bekannt; zum Beispiel aus der GB 1 107 335 A, der DE 66 04 271 U, der DE 10 2008 011 590 B1 und der US 2014/124073A1. Anhand der Figur 2 von DE 10 2008 011 590 B1 wird die Funktionsweise eines Progressivverteilers in Plattenbauweise ausführlich erläutert.

Ohne zu sehr in die Details zu gehen kann man die Funktionsweise eines Progressivverteilers in Plattenbauweise wie folgt beschreiben:
Ein zentraler Hauptkanal erstreckt sich von einer Anfangsplatte, durch alle Dosierplatten hindurch bis zu einer Endplatte. In der Endplatte sind zwei Umsteuerkanäle ausgebildet, die im Wechsel die zu beiden Seiten des Hauptkanals in den Dosierplatten befindlichen Kanäle mit Schmiermedium (in der Regel Öl oder Fett) versorgen.

In Folge dessen bewegen sich die in den Dosierplatten vorhandenen Dosierkolben von einer Endstellung in die andere Endstellung. An beiden Enden der Kolbenlaufbahn ist ein Auslass für den von dem Dosierkolben geförderten Schmierstoff vorhanden.

Durch die Bewegung des Dosierkolbens wird der Schmierstoff - in Abhängigkeit von der Bewegungsrichtung des Dosierkolbens - zu dem einen oder dem anderen Auslass und von dort zu den Lagerstellen gefördert.

Dabei wird zunächst der Dosierkolben betätigt, der sich in unmittelbarer Nähe der Endplatte befindet. Anschließend wird ein Dosierkolben nach dem anderen betätigt, bis der Dosierkolben, der sich in unmittelbarer Nähe der Anfangsplatte befindet, erreicht ist.

Dann beginnt der Durchlauf von neuem, mit dem Unterschied, dass sich die Bewegungsrichtung der Dosierkolben im Vergleich zu dem ersten Durchlauf umgekehrt hat. Dementsprechend werden die jeweils anderen Auslässe der Kolbenlaufbahnen mit Schmierstoff versorgt.

Die Dosierkolben haben über die Funktion "Fördern des Schmierstoffs" hinaus noch eine Steuer- oder Umschaltfunktion. In dieser Funktion sind sie Schieber eines Wegeventils.

Um einen modularen Aufbau eines solchen Schmiermittelverteilers zu erreichen, ist es bekannt, diese Schmiermittelverteiler in der sogenannten Scheiben- oder Plattenbauweise herzustellen. Dabei befindet sich am Anfang des Progressivverteilers eine Anfangsplatte und am Ende eine Endplatte. Zwischen diesen Platten sind mehrere Dosierplatten vorgesehen, wobei in der Regel in jeder Dosierplatte ein Dosierkolben angeordnet ist. Dementsprechend weist eine herkömmliche Dosierplatte zwei Ausgänge auf und versorgt zwei Lagerstellen mit Schmiermedium. Die Zahl der Dosierplatten eines Progressivverteilers hängt von der Zahl der zu versorgenden Schmierstellen ab.

Die am Markt verfügbaren Progressivverteiler bestehen aus Metall, vorzugsweise aus Aluminium, Messing, Bronze oder Stahl. Sie werden meistens aus einem Metall-Halbzeug, in der Regel aus Aluminium, durch spanende Bearbeitung hergestellt. Dabei wird aus wirtschaftlichen Gründen möglichst wenig Material abgetragen.

Der Fertigungsaufwand solcher Progressivverteiler ist erheblich und daher sind sie teuer in der Herstellung.

Aus den verwendeten Materialien und der spanenden Bearbeitung "aus dem Vollen" resultiert ein hohes Gewicht der Progressivverteiler. Das ist nachteilig, wenn der Progressivverteiler auf dynamisch bewegten Maschinen oder Bauteilen verbaut wird.

Weiterhin müssen bei spanend hergestellten Progressivverteilern die gebohrten Verbindungsleitungen im Gehäuse nach außen hin wieder verschlossen werden, was in der Regel mit Dichtstopfen oder Verschlussschrauben erreicht wird. Dies führt jedoch zu Toträumen in den Verbindungsleitungen. Toträume im Leitungssystem haben den Nachteil, dass sich in ihnen Schmiermedium ansammelt und oftmals sehr lange dort bleibt. Insbesondere bei sehr teuren Hochleistungsfetten wirkt sich jede Ansammlung von nicht genutztem Schmiermedium negativ auf die Wirtschaftlichkeit aus. Weiterhin birgt ein nicht durchströmter Totraum auch das Risiko, dass an dieser Stelle das Schmierfett separiert, das heißt in seine Bestandteile zerfällt, und der Seifenanteil des Fetts aushärtet. Das führt im Laufe der Zeit zu einem Verschluss der Verbindungsleitung und damit zu einer Fehlfunktion des Verteilers.

Ein weiterer Nachteil bei Progressivverteilern nach dem aktuellen Stand der Technik sind die Verbindungsleitungen, die zur Umsteuerung des Verteilers benötigt werden und von der letzten Stelle zur ersten Stelle des Verteilers zurückführen. Diese auch als "Umsteuerleitungen" bezeichneten Verbindungsleitungen haben ein Volumen, das größer ist als das Zuteilvolumen. Das Zuteilvolumen ergibt sich aus dem Produkt von Hub und Querschnittsfläche der Kolben in dem Progressivverteiler, die das Schmiermedium zu den verschiedenen Schmierstellen fördert. Weil das Volumen der Umsteuerleitungen größer ist als das Zuteilvolumen wird das Schmiermedium in den Umsteuerleitungen nur hin- und her bewegt und nicht komplett ausgetauscht. Auch das kann langfristig zu einer Separation von Fett in den Umsteuerleitungen und damit zu einer Fehlfunktion führen.

Aus der DE 10 2014 217 021 A1 ist eine Dosiereinrichtung zum dosierten Verteilen eines Mediums bekannt die aus Kunststoff gefertigt ist.

Im Zusammenhang mit der Erfindung, die einen Progressivverteiler in Plattenbauweise betrifft, werden die Begriffe "Oberseite" und "Unterseite" gebraucht, um die Platten und deren Zuordnungen zu beschreiben. Dabei wird diesen Begriffen folgendes Verständnis zugrunde gelegt:
Eine Anfangsplatte hat eine Oberseite und eine Unterseite. An der Oberseite ist ein Anschluss für eine Schmiermittelversorgungsleitung vorgesehen. Die Unterseite der Anfangsplatte liegt in montiertem Zustand auf der Oberseite einer ersten Dosierplatte auf. Die Zahl der Dosierplatten hängt von der Zahl zu versorgenden Lagerstellen ab**.**

In den Figuren sind die Oberseite der Dosierplatten und der Endplatte durch eine Nut für eine Dichtung leicht zu erkennen.

Die Unterseite der "letzten" Dosierplatte liegt auf der Oberseite der Endplatte auf.

Es versteht sich von selbst, dass die Begriffe "Oberseite" und "Unterseite" nicht im Sinne von vertikal oberhalb und vertikal unterhalb zu verstehen sind, weil die erfindungsgemäßen Dosierverteiler natürlich in verschiedensten Einbaulagen montiert werden können.

Der Erfindung liegt die Aufgabe zugrunde, einen Progressivverteiler bereitzustellen, der die Nachteile des Standes der Technik weitestgehend überwindet, leicht baut und kostengünstig herstellbar ist.

Diese Aufgabe wird erfindungsgemäß durch einen Progressivverteiler für Schmiermittel in Plattenbauweise mit einer Anfangsplatte, einer Endplatte und mit mindestens einer zwischen Anfangsplatte und Endplatte angeordneten Dosierplatte gelöst, wobei an einer Oberseite der Dosierplatten eine erste Kavität für einen ersten Dosierkolben und ein erstes Füllstück ausgebildet sind.

Das erste Füllstück ragt nach oben über die Oberseite der Dosierplatte hinaus, während die erste Kavität eine Vertiefung in der Oberseite der Dosierplatte darstellt.

An einer Unterseite der Dosierplatte sind eine zweite Kavität für einen zweiten Kolben und ein zweites Füllstück ausgebildet. An einer Unterseite der Anfangsplatte sind eine erste Vertiefung sowie ein zweites Füllstück ausgebildet und an einer Oberseite der Endplatte sind ein erstes Füllstück und eine zweite Vertiefung ausgebildet.

Durch dieses modulare System kann eine Dosierplatte an der Unterseite der Anfangsplatte so positioniert werden, dass das zweite Füllstück der Anfangsplatte in die erste Kavität an der Oberseite der Dosierplatte eintaucht. Die Stirnseite des zweiten Füllstücks der Anfangsplatte begrenzt dadurch eine in der ersten Kavität ausgeformte Kolbenlaufbahn für den ersten Dosierkolben der Dosierplatte.

In entsprechender Weise kann nun an der Unterseite der Dosierplatte entweder eine weitere Dosierplatte oder eine Endplatte montiert werden.

Im ersten Fall begrenzt das erste Füllstück auf der Oberseite der weiteren Dosierplatte zusammen mit der zweiten Kavität an der Unterseite der ersten Dosierplatte die Kolbenlaufbahn für den zweiten Dosierkolben der ersten Dosierplatte.

Auf diese Weise können so viele Dosierplatten nacheinander montiert werden, wie benötigt werden. Am Ende des Progressivverteilers wird eine Endplatte montiert.

Diese Endplatte weist an ihrer Oberseite ein erstes Füllstück und eine zweite Vertiefung auf. Das erste Füllstück wirkt mit der zweiten Kavität an der Unterseite der letzten Dosierplatte zusammen und begrenzt die Kolbenlaufbahn des zweiten Dosierkolbens in der letzten Dosierplatte.

Die zweite Vertiefung an der Oberseite der Endplatte nimmt das zweite Füllstück der letzten Dosierplatte auf.

Ein Unterschied zwischen den Vertiefungen, wie sie in der Anfangsplatte und der Endplatte vorhanden sind, und einer Kavität, wie sie an der Oberseite und der Unterseite der Dosierplatten vorgesehen sind, besteht darin, dass die Kavitäten tiefer sind als die Vertiefungen. Die Kavitäten sind auch tiefer als die Höhe der Füllstücke, so dass ein Füllstück eine Kavität nicht vollständig ausfüllt, sondern am Grund der Kavität Platz für einen Dosierkolben verbleibt.

Die Stirnseite des Füllstücks und der Grund der Kavität begrenzen eine Kolbenlaufbahn für einen Dosierkolben.

Die Vertiefungen sind lediglich so tief, wie es der Höhe der komplementären Füllstücke entspricht, so dass nach der Montage des erfindungsgemäßen Plattenverteilers die Vertiefungen nahezu vollständig von den entsprechenden Füllstücken ausgefüllt sind.

Die Kavitäten, die Vertiefungen und die Füllstücke können entweder als prismatische Körper oder Gebilde ausgebildet sein, so dass ihre Seiten einen rechten Winkel zu der Oberseite bzw. der Unterseite der Platten bilden. Wenn die Winkel zwischen den Wänden von Kavität und Füllstücken zu der Oberseite bzw. der Unterseite der Platte 90° beträgt, dann hat der Dosierkolben bevorzugt einen quadratischen Querschnitt.

Es ist aber auch möglich, die Kavitäten, die Vertiefungen und die Füllstücke als Pyramidenstümpfe auszubilden, so dass sich eine Ausformschräge von beispielsweise 2° ergibt. Das kann bei Spritzgusswerkzeugen vorteilhaft sein. In diesem Fall hat der Dosierkolben einen Querschnitt in Form eines Trapezes.

Allgemeiner ausgedrückt: Die Kavitäten, die Vertiefungen und die Füllstücke können noch andere, in der Regel nichtrotationssymmetrische Querschnitte aufweisen. Dabei ist von Bedeutung, dass die Kavitäten und die Vertiefungen im Spritzgussverfahren, möglichst mit einem schieberlosen Werkzeug, hergestellt werden können. In zusammengebautem Zustand begrenzen sie eine prismatische Laufbahn für den Dosierkolben.

Neben den erwähnten Kavitäten, Vertiefungen und Füllstücken sind in den diversen Platten noch verschiedene Durchbrüche, Nuten, Absätze und Kanäle ausgebildet. Diese Nuten, Absätze, Durchbrüche und Kanäle sind so ausgebildet, dass sie ohne Hinterschneidungen durch Spritzgießen hergestellt werden können. Dadurch können relativ einfache Werkzeuge zum Einsatz kommen und das Ausformen der Werkzeuge aus dem Spritzgusswerkzeug ist unproblematisch möglich.

Die Details dieser Durchbrüche, Kanäle, Absätze und so weiter werden nachfolgend im Zusammenhang mit der Figurenbeschreibung erläutert.

Die Einzelteile des erfindungsgemäßen Progressivverteilers können in bevorzugter Ausgestaltung aus Kunststoff, insbesondere aus einem Bulk Moulding Compound (BMC) durch Heißpressen oder im Spritzgießverfahren hergestellt werden. Ausweislich der Internet-Enzyklopädie "Wikipedia" ist BMC ein Faser-Matrix-Halbzeug, das zumeist aus kurzen Glasfasern und einem Polyester- oder Vinylesterharz besteht. Auch andere Verstärkungsfasern oder Harzsysteme sind möglich. Bei der erfindungsgemäßen Anwendung wird bevorzugt BMC mit sehr kurzen Fasern (Glasfasern und/oder Naturfasern) und geeigneten Füllstoffen, die den Schwund des Werkstücks weiter verringern, bevorzugt im Spritzgussverfahren verarbeitet. Die Anwendung dieses Herstellungsverfahrens bei Progressivverteilern bietet erhebliche Vorteile:
Das Gemisch wird nur ggf. leicht erwärmt in das Werkzeug gepresst und dort bei höherer Temperatur ausgehärtet. Anders als bei Thermoplasten kann es danach nicht wieder durch Erwärmung verflüssigt werden.

BMC wird in der Regel im Heißpressverfahren verarbeitet, was kurze Taktzeiten ermöglicht. Die BMC-Masse wird dazu zentral in ein beheiztes, geteiltes Werkzeug eingelegt. Beim Schließen des Werkzeugs verteilt sich das BMC in der Werkzeugkavität.

Durch die Verwendung von Kunststoff kann im Vergleich zu den "klassischen" Werkstoffen Aluminium und Stahl aufgrund der deutlich geringeren Dichte eine Gewichtseinsparung von teilweise weit über 50 % realisiert werden. Ein weiterer Effekt, der sich positiv auf das Gewicht auswirkt, ist, dass beim Spritzgießverfahren nur so viel Material in die Kavität des Werkzeugs gespritzt wird, wie für die Funktion notwendig ist. Somit kann durch die Geometrie und Formgebung des Progressivverteilers eine weitere Gewichtsreduktion realisiert werden.

Durch den Einsatz des schwindungsfrei einstellbaren Bulk Moulding Compounds, können der Verteilerblock und die Kolben werkzeugfallend hergestellt werden. Damit ist gemeint, dass die Anfangsplatten, Dosierplatten, Endplatten und die Kolben ohne Nacharbeit, d**.** h. einbaufertig aus dem Werkzeug entnommen werden. Eine mechanische Bearbeitung der Funktionsflächen des Progressivverteilers ist nicht erforderlich. Trotzdem weisen Verteilerblock und Kolben die geforderte hohe Präzision und Maßhaltigkeit beim Passungsspiel zwischen Kolben und Kolbenbohrung auf. Daraus resultieren erhebliche wirtschaftliche Vorteile.

Die Verwendung von werkzeugfallenden Bauteilen erlaubt darüber hinaus eine vorteilhafte geometrische Gestaltung der Bauteile.

Die Dosierkolben müssen nicht rund sein, sondern können zum Beispiel einen quadratischen Querschnitt aufweisen. Die Dosierkolben sowie die Dosierkolben spielarm führenden Kolbenlaufbahnen können als Dreieck, Viereck, oder Gleichdick mit drei oder vier "Ecken" ausgebildet werden.

Solche Dosierkolben können sich nicht relativ zu der Kolbenlaufbahn verdrehen; sie sind "verdrehsicher". Das lässt sich dazu nutzen, um variable Dosiermengen des Progressivverteilers zu ermöglichen. Das kann zum Beispiel dadurch erreicht werden, dass die in die Dosierkolben eingearbeiteten Nuten nicht nur quer zur Längsachse der Kolben ausgeführt werden, sondern auch beispielsweise in einem von 90° verschiedenen Winkel zur Längsachse. Die Nuten können auch zumindest bereichsweise in Richtung der Längsachse der Dosierkolben verlaufen. Dadurch kann der zum Verschließen und öffnen der Bohrungen benötigte Hub verändert (verkleinert oder vergrößert) werden. In Folge dessen ändert sich auch die Dosiermenge.

In den bekannten, nicht verdrehsicheren Dosierkolben sind umlaufende Nuten vorhanden, um die Umsteuerkanäle zu schalten und zu verbinden. Die herkömmlichen Dosierkolben mit einem kreisrunden Querschnitt sind nicht verdrehsicher.

Einer unterschiedlichen Dosierung/einer unterschiedlichen Dosiermenge durch eine Längenänderung des/oder der Dosierkolben sind Grenzen gesetzt, da eine Längenänderung auch eine Verbreiterung der Nut bedeutet. Daraus können sich Probleme ergeben.

Bei einem verdrehsicheren Kolben, kann man den Verlauf der Nut auf dem Kolben frei gestalten; der Verlauf der Nut kann sogar "zick-zack"-förmig sein. Dann können Längenänderungen und damit auch Änderungen der Dosiermenge ohne die Nachteile von "breiten" Nuten realisiert werden. Die Bandbreite der Dosiermengen kann dadurch erheblich vergrößert werden. Durch Änderungen der Nutbreite sind in der Regel Dosiermengen realisierbar bei denen das Verhältnis von kleinster Dosiermenge zu größter Dosiermenge etwa 1:2 beträgt. Mit den erfindungsgemäßen Dosierkolben sind Verhältnisse von 1:3 bis 1:4 realisierbar. Das ist ein weiterer Vorteil der Erfindung.

Durch die bei einem verdrehsicher ausgeführten Kolben nicht mehr notwendige rotationssymmetrische Nutgeometrie, kann ein kürzerer Verfahrweg des Kolbens realisiert werden. Dies bietet den Vorteil einer höheren Anzahl von eng beieinander angeordneten Zu- und Abläufen zum Kolben. bzw. Einlässen und Auslässen der Kolbenlaufbahn.

Der erfindungsgemäße Progressivverteiler soll bevorzugt in Plattenbauweise ausgeführt sein. Bei einem werkstoffgerecht ausgeführten erfindungsgemäßen Progressivverteiler ist es möglich, mit nur einem einzigen Werkzeug (mit mindestens drei Kavitäten und einer variablen Verteilergeometrie) alle Arten von Scheiben zu spritzen und damit alle Bauteile für Progressivverteiler mit verschiedenen Zahlen von Anschlüssen herzustellen. Bei den anderen Bauarten von Verteilerarten müsste für jede Zahl von Anschlüssen ein separates Werkzeug verwendet werden.

Ein weiterer Vorteil eines spritzgegossenen Scheibenverteilers ist die geometrische Gestaltungsfreiheit. Durch diese lassen sich totraumfreie Schmierstoffkanäle realisieren. Dies ist nur aufgrund des Fertigungsverfahrens und entsprechender Anordnung der Geometrien möglich. Somit lassen sich in den Platten auch problemlos Leitungsverläufe um mehrere Ecken und in unterschiedlichen Ebenen realisieren.

Weiterhin ist eine zeitgemäße Überwachungsmöglichkeit des Verteilers in unterschiedlichen Ausführungen (Sichtanzeiger, Näherungssensor, Magnetfeldsensor, Ultraschallsensor, ...) für das Produkt vorgesehen. Durch den Einsatz von Kunststoffen ist keine materialabhängige Störwirkung auf die Überwachungssensorik vorhanden. Das ist ein weiterer Vorteil der Erfindung gegenüber metallischen Werkstoffen

Die wesentlichen Vorteile des erfindungsgemäßen Progressivverteilers sind:
Geringeres Bauteilgewicht.
Geringerer Bauraumbedarf.
Günstige Herstellungskosten.

Keine 90°-Winkel in den Leitungsführungen. Dadurch werden Strömungsverluste, Druckerhöhung etc. vermieden.

Keine Toträume; dadurch bleibt der Schmierstoff nur eine begrenzte Zeit im Progressivverteiler. Die aus einer zu großen Verweildauer resultierenden Beeinträchtigungen der Schmierwirkung bei Langzeitbetrieb werden vermieden.

Kurze Umsteuerkanäle, dadurch verkleinerte Dosiermengen. Verwendung von im Durchmesser variablen Leitungen. Doppelte Leitungsführung für Umspülungen.

Die eingesetzte Schmierstoffmenge wird verringert infolge Dosiervarianz und kurze Leitungswege Verdrehsicherer Kolben, damit kürzere Hubwege und vergrößerte Varianz (Bandbreite) der Dosiermengen.

Durch Gewichtsersparnis Verringerung der bewegten Massen, damit Energieeinsparung der geschmierten Vorrichtung.

Durch geringere Massen weniger bewegte Massen, damit ruhigere Bewegung, weniger Nachschwingen, genauere Positionierung, Verbesserung der Qualität Einbau auf bewegten Bauteilen möglich, damit Einbau kurz vor der Schmierstelle möglich, dadurch Verbesserung der Versorgung mit Schmierstoff

Die doppelte Leitungsführung bei den Umsteuerkanälen des erfindungsgemäßen Progressivverteilers hat den Vorteil, dass kein Schmiermedium im Verteiler verbleibt.

Bei Standard-Progressivverteilern wird die Leitung zum Dosierraum jeweils in zwei Richtungen durchströmt: Einmal zum Befüllen des Dosierraums und in Gegenrichtung beim Entleeren des Dosierraums, wenn das Schmiermittel zum Auslass gefördert wird. Bei langen Leitungen (Umsteuerleitungen) und kleinen Dosiermengen erfolgt hier kein Austausch, sondern das Schmiermedium verbleibt in der Leitung und wird nur hin- und hergeschoben.

Weitere Vorteile und vorteilhafte Ausgestaltungen der Erfindung sind den nachfolgenden Figuren, sowie deren Beschreibung und den Patentansprüchen entnehmbar.

Es zeigen:
- Figur 1: ein Ausführungsbeispiel eines erfindungsgemäßen Progressivverteilers in verschiedenen Ansichten (Zeichnungsblätter 1/21 bis 4/21);
- Figur 2: eine Dosierplatte in zwei Isometrien (Zeichnungsblätter 5/21 und 6/21);
- Figur 3: eine Anfangsscheibe in zwei Isometrien;
- Figur 4: eine Endscheibe in verschiedenen Ansichten (Zeichnungsblätter 8/21 und 9/21);
- Figur 5: ein Ausführungsbeispiel eines Dosierkolbens in verschiedenen Ansichten;
- Figur 6: die Dosierplatte in verschiedenen Ansichten und Schnitten (Zeichnungsblätter 11/21 und 12/21);
- Figur 7: die Anfangsscheibe in verschiedenen Ansichten und Schnitten (Zeichnungsblätter 13/21 und 14/21);
- Figur 8: die Endscheibe in verschiedenen Ansichten und Schnitten (Zeichnungsblätter 15/21 und 16/21) und die
- Figuren 9 bis 13: dienen der Erläuterung der Funktionsweise des erfindungsgemäßen Progressivverteilers.

### Beschreibung des Ausführungsbeispiels

In den Figuren werden die Bauteile eines Ausführungsbeispiels eines erfindungsgemäßen Progressivverteilers in montiertem Zustand oder als Einzelteile dargestellt. Die Geometrien der verschiedenen Bauteile sind in manchen Bereichen komplex. Durch die Zusammenschau der verschiedenen Darstellungen ist der Fachmann jedoch in der Lage, den Figuren die Geometrien der einzelnen Bauteile zu entnehmen.

Um die Erfindung zu verstehen, sollte man sich vor Augen halten, dass zum Beispiel die Kolbenlaufbahn nicht, wie üblich durch eine zylindrische Bohrung in's Volle hergestellt wird. Die Kolbenlaufbahn ist vielmehr an der Schnittstelle zwischen zwei Platten (z. B. zwei Dosierplatten; einer Anfangsplatte und einer Dosierplatte oder einer Dosierplatte und einer Endplatte) ausgebildet. Bei einer Kolbenlaufbahn mit quadratischem Querschnitt, sind drei der vier Wände Teil einer Kavität der Dosierplatte, die vierte Wand wird von der Stirnfläche eines Füllstücks von einer benachbarten Platte gebildet, das in die Kavität eingeführt wird.

Entsprechendes gilt auch für die Umsteuerkanäle in der Endplatte und für weitere in den Dosierplatten vorhanden Kanäle.

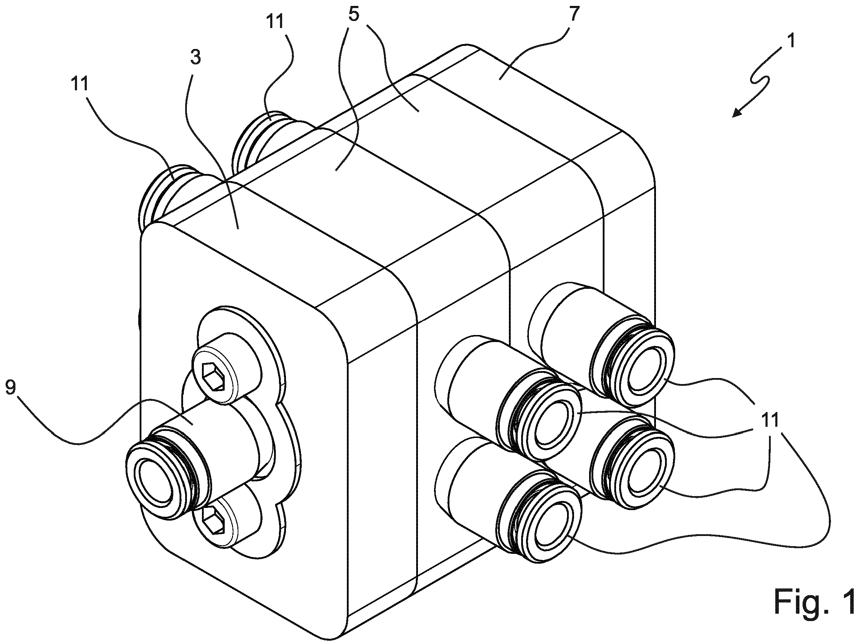

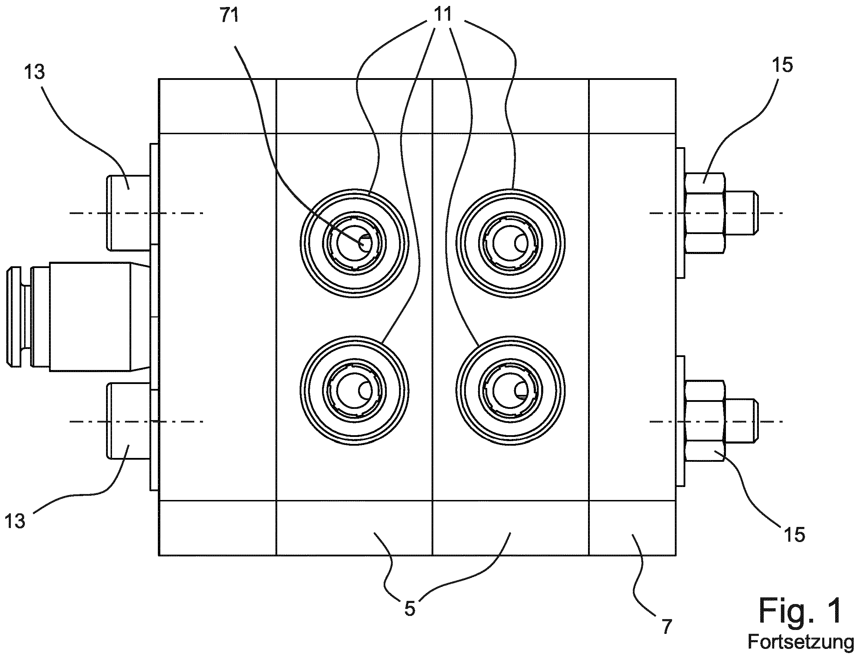

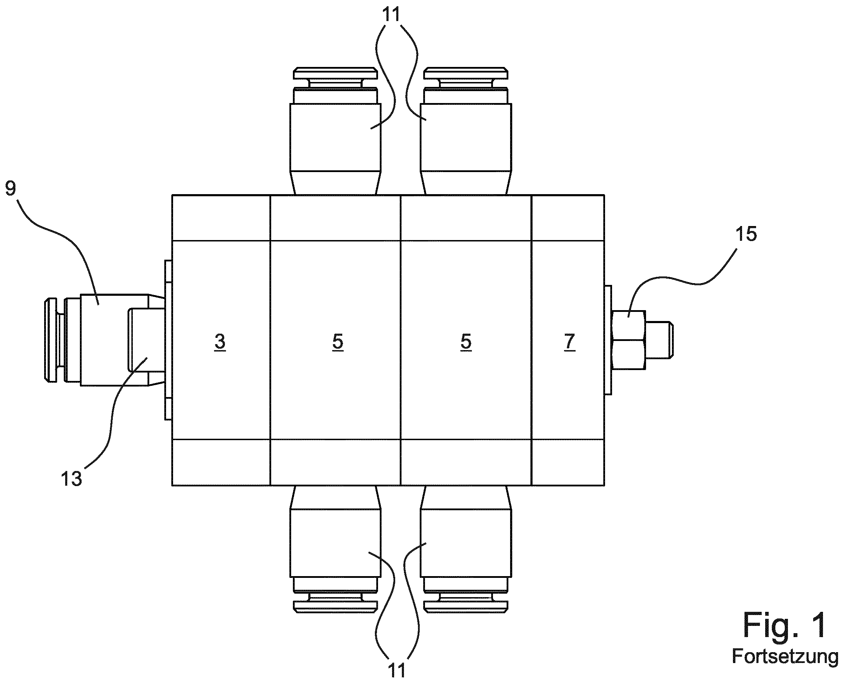

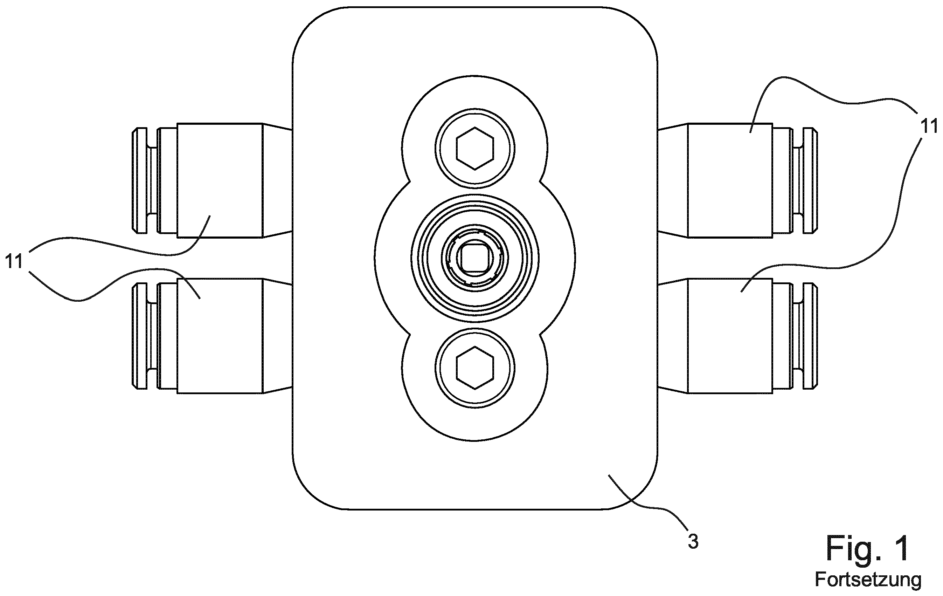

In der Figur 1 ist ein Ausführungsbeispiel eines erfindungsgemäßen Progressivverteilers 1 in verschiedenen Ansichten und einer Isometrie dargestellt. Der Progressivverteiler 1 umfasst eine Anfangsplatte 3, zwei Dosierplatten 5 und eine Endplatte 7.

An einer Oberseite der Anfangsplatte 3 ist ein Anschlussstutzen 9 vorgesehen. An den Dosierplatten 5 sind an zwei gegenüberliegenden Seitenflächen jeweils zwei Auslässe 11 vorgesehen. An den Auslässen 11 werden Schmierstoffleitungen (nicht dargestellt) angeschlossen, die den Schmierstoff zu den Lagerstellen bringen.

Insgesamt hat jede Dosierplatte 5 vier Auslässe 11. Dies ist der Tatsache geschuldet, dass bei diesem Ausführungsbeispiel zwei Dosierkolben in jeder Dosierplatte 5 vorhanden sind. Jedem Dosierkolben sind zwei Auslässe 11 zugeordnet.

Bei herkömmlichen Progressivverteilern in Plattenbauweise ist nur ein Dosierkolben je Platte vorhanden. D. h. der Bauraumbedarf ist bei einem herkömmlichen Progressivverteiler annähernd doppelt so groß wie bei dem erfindungsgemäßen Progressivverteiler.

Die Platten 3, 5 und 7 werden mit Hilfe von zwei Spannschrauben 13 zusammengehalten. An der Unterseite der Endplatte 7 sind dementsprechend Unterlegscheiben und Muttern 15 vorgesehen, die auf die Spannschrauben 13 aufgedreht und angezogen werden.

Aus der Figur 1 wird deutlich, dass es ohne weiteres möglich ist, anstelle von zwei Dosierplatten drei, vier, fünf oder mehr Dosierplatten 5 zwischen der Anfangsplatte 3 und der Endplatte 7 anzuordnen. Die Zahl der Dosierplatten 5 variiert entsprechend der Zahl der Lagerstellen, die mit Schmiermittel zu versorgen sind.

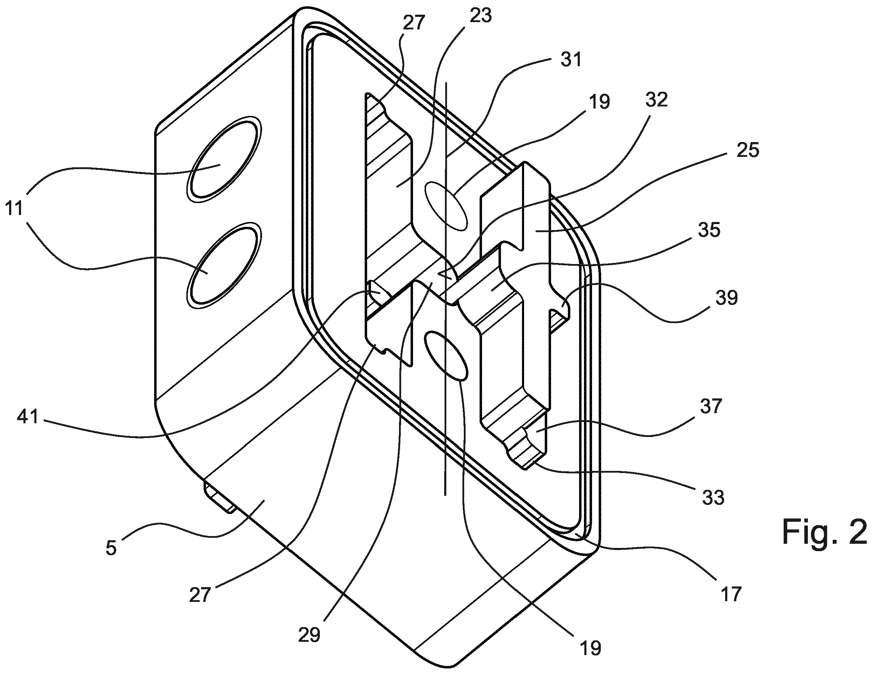

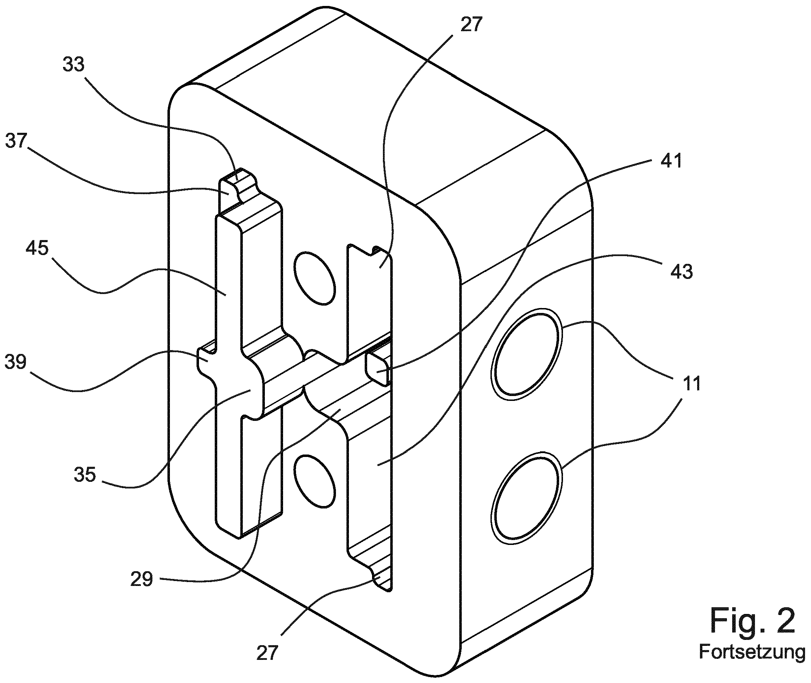

In der Figur 2 ist eine Dosierplatte 5 in zwei Isometrien auf den Seiten 5/21 und 6/21 dargestellt. Auf Seite 5/21 ist eine Oberseite der Dosierplatte 5 dargestellt. Auf Seite 6/21 ist eine Unterseite der Dosierplatte 5 dargestellt. Bei diesem Ausführungsbeispiel ist an der Oberseite der Dosierplatte 5 (und der Endplatte 7) eine umlaufende Nut 17 ausgebildet. In die Nut 17 wird ein nicht dargestellter Dichtring eingelegt, so dass zwischen der Oberseite der Dosierscheibe 5 und der benachbarten Scheibe (dies kann eine Anfangsplatte 3 oder ebenfalls eine Dosierplatte 5 sein) kein Schmierstoff aus dem Inneren des Progressivverteilers in die Umgebung gelangt.

In der Dosierplatte 5 sind zwei Durchgangsbohrungen 19 vorgesehen. Durch diese Durchgangsbohrungen 19 ragt der Schaft der Spannschrauben 13. In zwei einander gegenüberliegenden Seitenwänden der Dosierplatte 5 sind insgesamt vier Auslässe 11 vorhanden.

An der Oberseite der Dosierplatte 5 (Seite 5/21) sind eine erste Kavität 23 und ein erstes Füllstück 25 ausgebildet.

Die erste Kavität 23 begrenzt mit ihrem in Figur 2 nicht sichtbaren Grund und dem unteren Bereich ihrer Seitenwände eine Kolbenlaufbahn.

Die Grundfläche der ersten Kavität 23 kann man als Rechteck beschreiben, dessen Enden kleine Erweiterungen 27 aufweisen. Diese Erweiterungen 27 begrenzen Schmiermittelkanäle. In der Mitte der ersten Kavität 23 ist an einer Seite eine Tasche 29 ausgebildet. Die Tasche 29 erstreckt sich in Richtung des ersten Füllstücks 25 und ragt über eine Mittellinie 31 und einen Mittelpunkt 32 der Dosierplatte 5 hinaus.

Die erste Kavität 23 ist im Bereich der Tasche 29 weniger tief als im Bereich der rechteckigen Grundfläche und der Erweiterung 27. Dies ist an einer Zwischenfläche 41 erkennbar, die man auch als Absatz bezeichnet kann.

Das erste Füllstück 25 hat eine Grundfläche, die in etwa der Grundfläche der ersten Kavität 23 entspricht. Das erste Füllstück 25 kann man als ein langgezogenes Rechteck mit zwei Verlängerungen 33 sowie einem Vorsprung 35 beschreiben. Die Breite des Vorsprungs 35 entspricht der Breite der Tasche 29. Allerdings ragt der Vorsprung 35 weniger von der rechteckigen Grundfläche des ersten Füllstücks in Richtung der Mittelachse, als dies bei der Tasche 29 der Fall ist. Daher berühren sich die Tasche 29 und der Vorsprung 35 "neben" der Mittellinie 31.

Anders gesagt: Der Vorsprung 35 ist kürzer als die Tasche 29.

Das erste Füllstück 25 weist zwei Absätze 37 auf. Von diesen beiden Absätzen 37 ist nur einer in der Figur 2 zu sehen. Der andere ist durch das erste Füllstück 25 verdeckt.

Die Absätze 37 reduzieren die Höhe des Füllstücks entlang eines schmalen Streifens, der an dem Vorsprung 33 beginnt und fast bis zur Mitte des Füllstücks reicht.

Die beiden Absätze 37 gehen jedoch nicht ineinander über, sondern sind durch einen Steg 39 voneinander getrennt. In zusammengebautem Zustand begrenzen die Absätze 37 zusammen mit einer Grundfläche einer zweiten Kavität einer benachbarten Dosierplatte 5 Schmiermittelkanäle.

Wie bereits erwähnt, ist auf Seite 6/21 der Figuren eine Unterseite der Dosierplatte 5 dargestellt. Auch hier sind eine zweite Kavität 43 und ein zweites Füllstück 45 ausgebildet.

Die Geometrien der ersten Kavität 23 und der zweiten Kavität 43 sind gleich. Entsprechendes gilt auch für das erste Füllstück 25 und das zweite Füllstück 45. Sie werden mit verschiedenen Bezeichnungen und Bezugszeichen versehen, weil man dadurch das Zusammenwirken von Kavitäten und Füllstücken besser beschreiben kann.

Auf der Oberseite der Dosierplatte 5 (Zeichnungsblatt 5/21) ist die Zwischenfläche 41 in der Tasche 29 der zweiten Kavität 43 gut zu erkennen. Wie bereits erwähnt, entspricht die Höhe des zweiten Füllstücks 45 der Tiefe der ersten Kavität 23 bis zur Höhe der Zwischenfläche 41.

Anders ausgedrückt, wenn man eine erste Dosierplatte 5 mit ihrer Unterseite auf die Oberseite einer zweiten Dosierplatte 5 aufsetzt, dann füllt das zweite Füllstück 45 (an der Unterseite der ersten Dosierplatte 5) die erste Kavität 23 an der Oberseite der zweiten Dosierplatte 5 bis zu der Zwischenfläche 41 aus. Darunter befindet sich ein nicht vom Füllstück 25 ausgefüllter Raum. Er bildet zusammen mit der Stirnfläche des zweiten Füllstücks die Kolbenlaufbahn für den in der ersten Kavität 23 geführten Dosierkolben (nicht sichtbar in der Figur 2).

Entsprechendes gilt auch im Zusammenhang mit der zweiten Kavität 43 an der Unterseite einer Dosierplatte. Sie wird durch das erste Füllstück 25 an der Oberseite einer benachbarten Dosierplatte 5 bis zur Zwischenfläche 41 aufgefüllt und es verbleibt ein vom Grund der zweiten Kavität 43 und der Stirnfläche des ersten Füllstücks 25 begrenzter Raum, der die Kolbenlaufbahn für den Dosierkolben bildet.

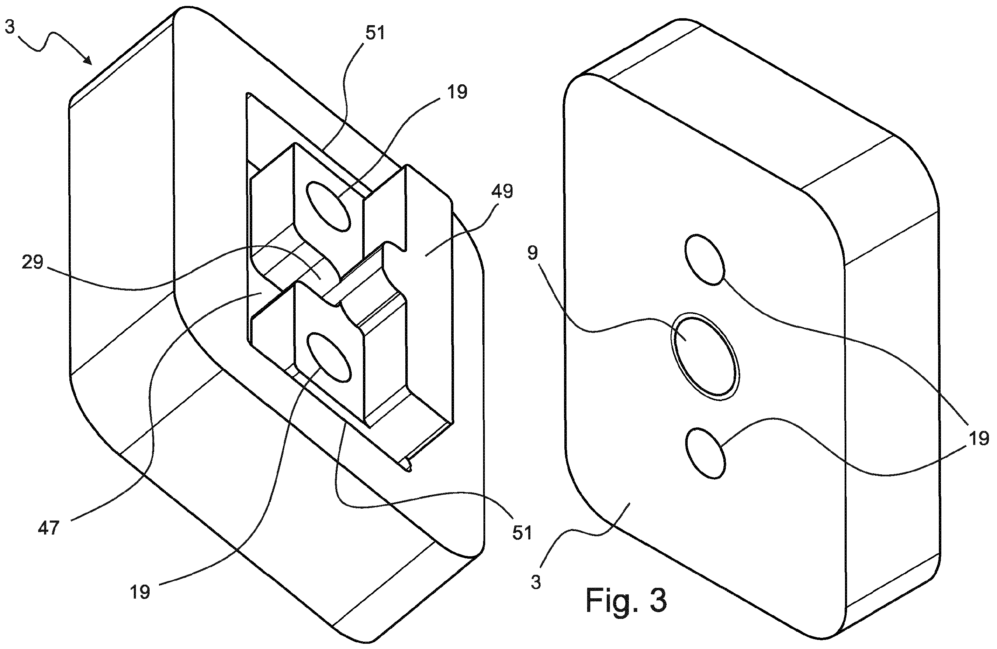

In der Figur 3 ist eine Anfangsscheibe 3 in zwei Isometrien dargestellt. Im oberen Teil der Figur 3 ist die Oberseite der Anfangsplatte 3 dargestellt. Sie umfasst zwei Durchgangsbohrungen 19 für die Spannschrauben 13 und einen Anschluss 9, an den eine Schmiermittel-Versorgungsleitung angeschlossen wird.

Die Unterseite der Anfangsscheibe ist im linken Teil der Figur 3 dargestellt. Die Unterseite weist eine erste Vertiefung 47 und ein drittes Füllstück 49 auf. Die Grundfläche der ersten Vertiefung 47 entspricht weitestgehend den Grundflächen von erster Kavität 23 und zweiter Kavität 43.

Allerdings ist die erste Vertiefung 47 weniger tief als die Kavitäten 23 und 43, weil die erste Vertiefung 47 keinen Dosierkolben aufnimmt. Anders ausgedrückt: Die Tiefe der ersten Vertiefung 47 entspricht der Höhe eines ersten Füllstücks 23.

Der Unterschied zwischen dem dritten Füllstück 49 und den ersten bzw. zweiten Füllstücken 25 und 45 besteht darin, dass das dritte Füllstück keine seitlichen Verlängerungen 33 und keinen Absatz 37 aufweist.

An den Enden der ersten Vertiefung 47 sind zwei Nuten 51 ausgebildet, welche die erste Vertiefung 47 mit den Enden des dritten Füllstücks 49 verbinden. Diese Nuten begrenzen Kanäle in der Anfangsplatte 3.

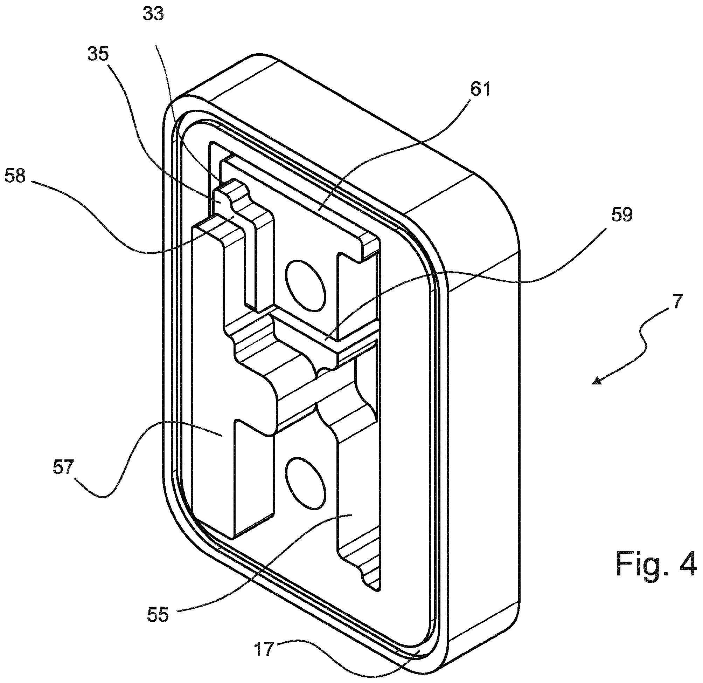

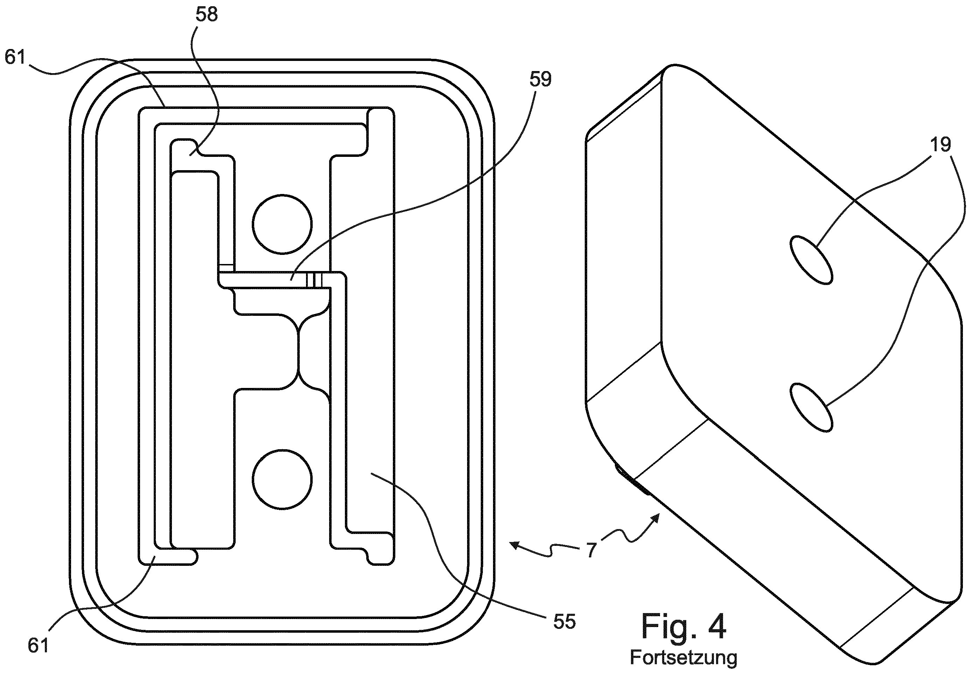

In der Figur 4 (Zeichnungsblätter 8/21 und 9/21) ist eine Endscheibe 7 in zwei Isometrien und einer Ansicht von oben dargestellt. Die Oberseite (Zeichnungsblatt 8/21 und linke Hälfte des Zeichnungsblatts 9/21) ist an der umlaufenden Nut 17 zu erkennen und umfasst eine zweite Vertiefung 55 und ein viertes Füllstück 57. Die Unterseite der Endscheibe 7 (Rechte Hälfte des Zeichnungsblatts 9/21) weist nur zwei Durchgangsbohrungen 19 auf.

An dem Ende des vierten Füllstück 57 mit der Verlängerung 33 ist ein Absatz 58 ausgebildet, der sich bis zu einer ersten Nut 59 erstreckt. Die Nut 59 endet an einer ersten Stirnseite der zweiten Vertiefung 55. Die Nut 59 hat die Funktion eines ersten Umsteuerkanals.

An dem anderen Ende des vierten Füllstücks 57 ist eine zweite Nut 61 ausgebildet. Die zweite Nut 61 endet an einer zweiten Stirnseite der zweiten Vertiefung 55. Die Nut 61 hat die Funktion eines zweiten Umsteuerkanals. Die Nuten 59 und 61 sind so geführt, dass sie sich nicht schneiden. Außerdem sind sie so geführt, dass sie mit Hilfe eines bevorzugt schieberlosen Spritzgieß-Werkzeugs hergestellt werden können.

Wie bereits anhand der Figur 1 veranschaulicht, ist es möglich, aus einer Anfangsplatte, einer oder mehreren Dosierplatten 5 und einer Endplatte 7 einen Progressivverteiler zusammenzusetzen.

Bei dem dargestellten Ausführungsbeispiel sind die Kavitäten 23, 43 in der Dosierplatte 5 sowie die erste Vertiefung 47 in der Anfangsplatte 3 und die zweite Vertiefung 55 in der Endplatte 7 mit "senkrechten" Wänden ausgebildet. Damit ist gemeint, dass die Wände zu der Oberseite bzw. Unterseite der entsprechenden Platte rechtwinklig angeordnet sind.

Es ist auch möglich, die Wände dieser Kavitäten und Vertiefungen mit einer Ausformschräge zu versehen. Dann werden dementsprechend die Füllstücke 25, 45, 49 und 55 als Pyramidenstumpf ausgebildet und nicht, wie bei dem in den Figuren dargestellten Ausführungsbeispiel, als prismatische Körper.

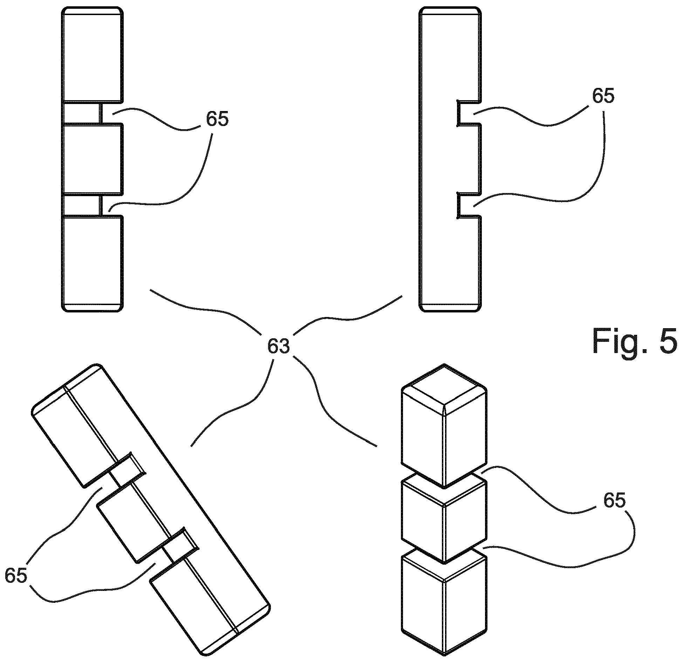

In der Figur 5 ist nun ein Dosierkolben 63 in verschiedenen Ansichten dargestellt. Er hat bei diesem Ausführungsbeispiel einen quadratischen Querschnitt und ist daher "verdrehsicher". Er weist zwei Steuernuten 65 auf.

Jeweils ein Dosierkolben 63 wird in die erste Kavität 23 an der Oberseite einer Dosierplatte 5 und in die zweite Kavität 43 an der Unterseite einer Dosierplatte 5 eingesetzt. Anschließend werden diese Kavitäten entweder durch eine Anfangsplatte 3, eine benachbarte Dosierplatte 5 oder eine Endplatte 7 verschlossen. Dadurch entstehen in einer Dosierplatte 5 zwei Kolbenlaufbahnen für die zwei Dosierkolben 63. Bei herkömmlichen Progressivverteilern ist nur ein Dosierkolben in einer Dosierplatte vorhanden. Der erfindungsgemäße Progressivverteiler baut daher sehr kompakt und ist auch deswegen sehr leicht.

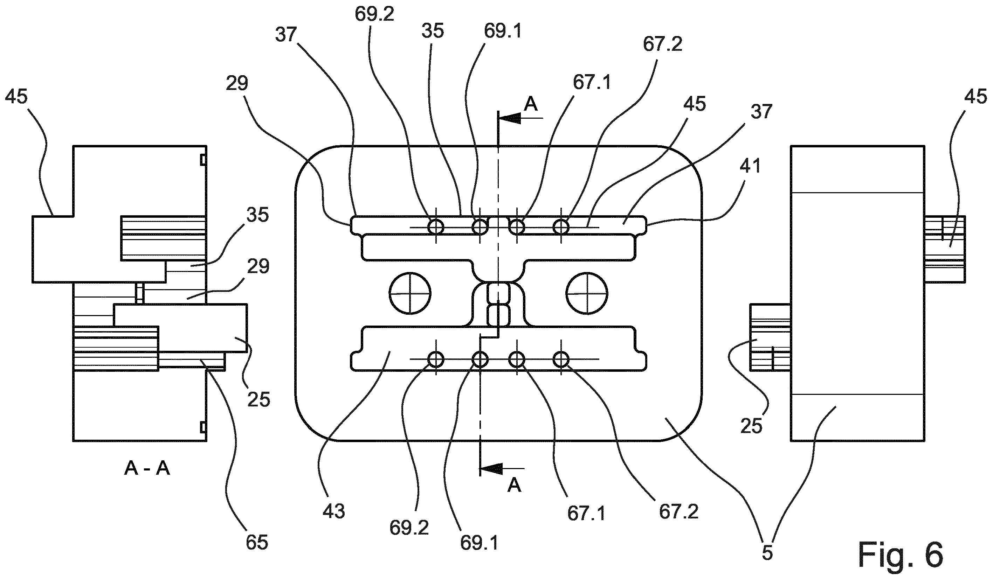

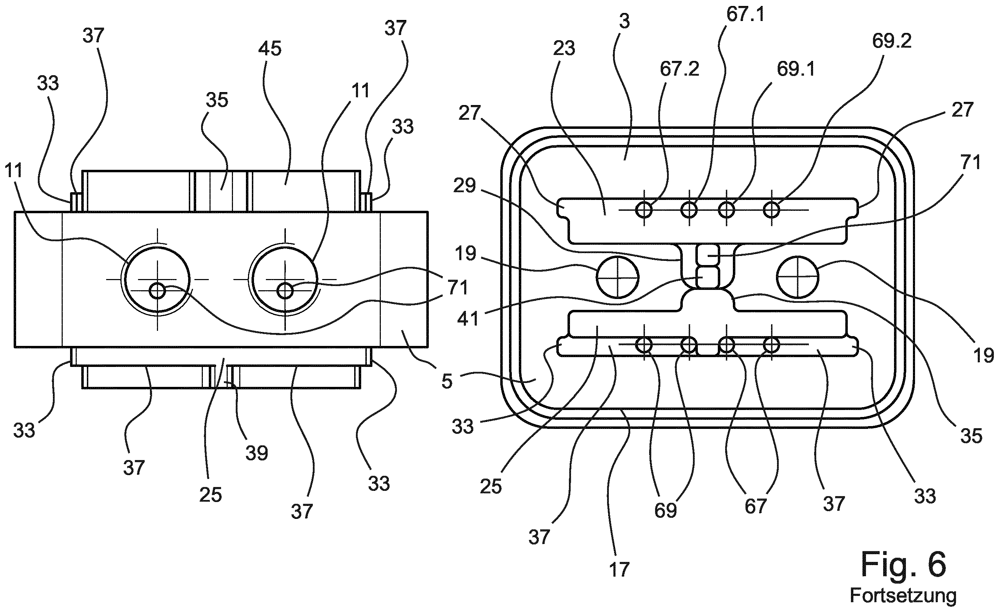

In den Figuren 6, 7 und 8 sind die Dosierplatte 5, die Anfangsplatte 3 und die Endplatte 7 in verschiedenen Ansichten und Schnitten dargestellt. Anhand dieser Figuren werden weitere konstruktive Details des erfindungsgemäßen Progressivverteilers 1 dargestellt und erläutert.

In der Figur 6 ist eine Dosierplatte 5 in verschiedenen Ansichten dargestellt. In der Figur 6 sind Bohrungen oder Durchgangsöffnungen 67.1, 67.2 sowie 69.1 und 69.2 sichtbar. Sie durchdringen die Füllstücke 25 bzw. 45 und enden in den auf der jeweils anderen Seite der Dosierplatte 5 angeordneten Kavitäten 43, 23. Die Durchgangsöffnungen 67.1, 67.2, 69.1 und 69.2 beginnen auf den durch den Steg 39 getrennten Absätzen 37 der Füllstücke 45, 25. Sie bilden zusammen mit den Absätzen 37 Schmiermittelkanäle, welche die zwei in einer Dosierplatte 5 vorhandenen Kolbenlaufbahnen verbinden.

Je nachdem in welcher Position sich die in den Kavitäten 23, 43 befindlichen Kolben 63 (Nicht dargestellt in Figur 6) befinden, sind die Bohrungen oder Durchgangsöffnungen 67.1, 67.2, 69.1 und 69.2 offen oder geschlossen.

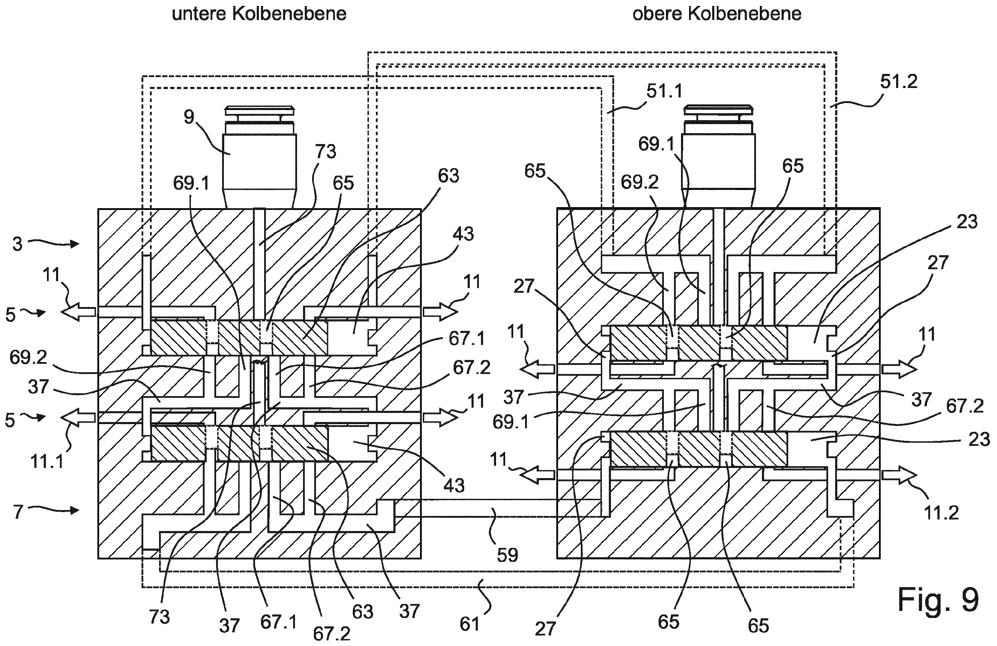

Die Durchbrüche 71 (Siehe das Zeichnungsblatt 12/21, linke Seite) verbinden die Kolbenlaufbahnen mit den Auslässen 11. Auch hier gilt: Entsprechend der Position der in den Kavitäten 23, 43 befindlichen Kolben 63 (nicht dargestellt in Figur 6) werden die Öffnungen 67, 69 von einem der Kolben 63 verschlossen oder sind geöffnet. Details dazu werden weiter unten anhand der Figuren 9 ff erläutert.

Etwa in der Mitte der Dosierplatte 5 sind der bereits in der Figur 2 erwähnte Absatz 41 und ein Durchbruch 73 vorhanden.

Der Durchbruch 73 ist Teil einer Schmiermittel-Versorgung, die am Anschluss 9 der Anfangsplatte 3 beginnt und an der Endplatte 7 endet.

Der Absatz 41 teilt die Tasche 29 der ersten Kavität 23 und die Tasche 29 der zweiten Kavität 43 in zwei Steuerkanäle. Die Steuerkanäle haben aus Gründen der Übersichtlichkeit keine gesonderten Bezugszeichen.

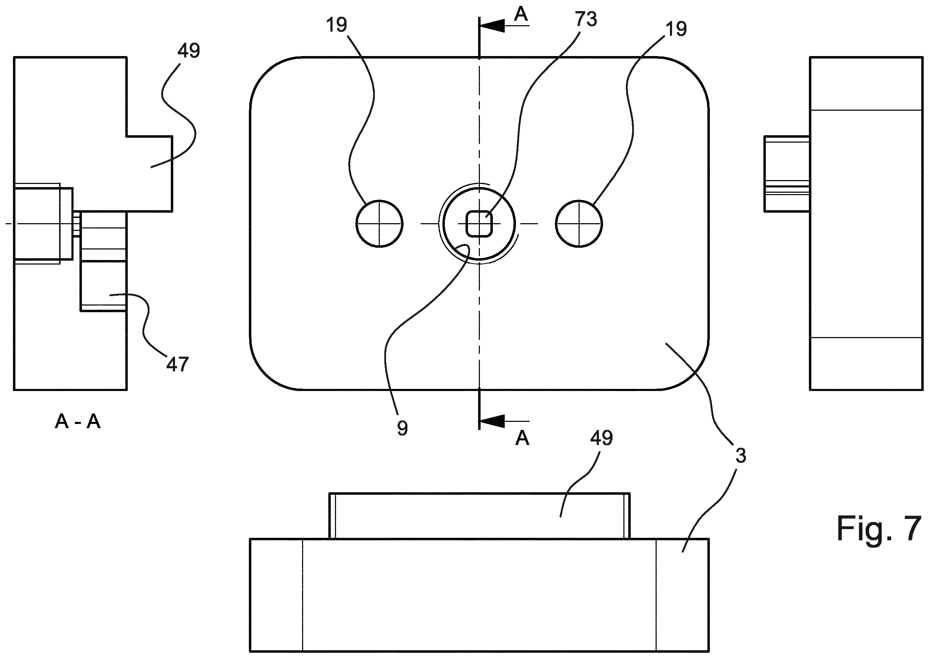

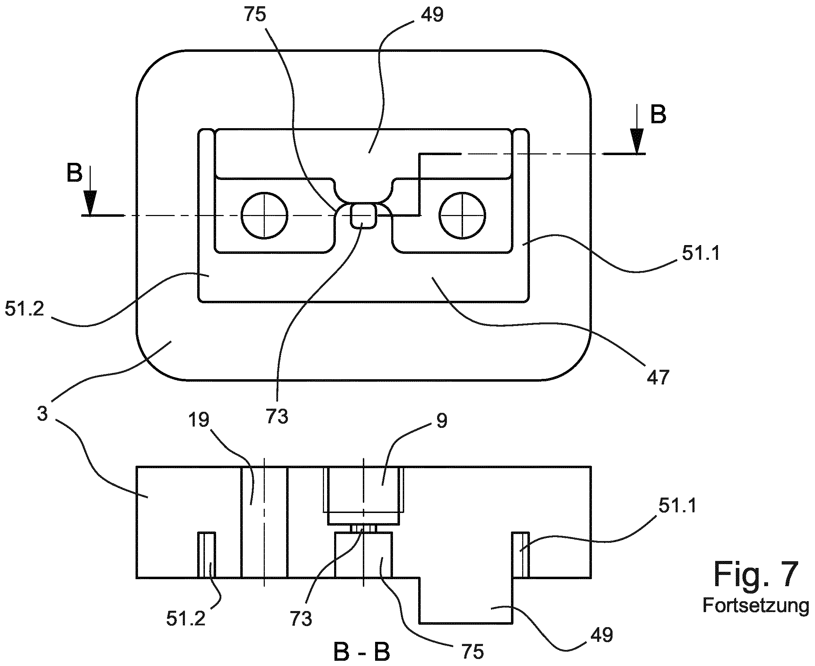

In der Figur 7 (Zeichnungsblätter 13/21 und 14/21) ist die Anfangsplatte 3 in verschiedenen Ansichten dargestellt. Im Zeichnungsblatt 13/21) ist in der Mitte eine Ansicht von oben der Anfangsplatte 3 dargestellt. In ihr sind die Durchgangsbohrungen 19 für die Spannschrauben 13 und der Anschluss 9 für die Schmiermittelversorgung sichtbar, in dessen Zentrum der bereits erwähnte Durchbruch 73 angeordnet ist.

In der Ansicht von unten (Zeichnungsblatt 14/21) kann man den Durchbruch 73 sowie die Durchgangsbohrungen 19 erkennen. Außerdem sind das dritte Füllstück 49 und die erste Vertiefung 47 sichtbar. An den Enden der ersten Vertiefung 47 sind zwei Nuten 51.1 und 51.2 ausgebildet.

In zusammengebautem Zustand des Progressivverteilers 1 wird die erste Vertiefung 47 von einem ersten Füllstück 25 einer Dosierplatte 5 (nicht dargestellt) ausgefüllt. Das erste Füllstück 25 umfasst einen Vorsprung 35 (siehe Figur 2), der einen Großteil der Tasche 75 der ersten Vertiefung 47 ausfüllt, ohne den Durchbruch 73 zu verschließen. Wegen der Tasche 75 und des Vorsprungs 35 besteht keine Verbindung zwischen den Nuten 51.1 und 51.2.

Die Nuten 51.1 und 51.2 stellen eine hydraulische Verbindung zu den Stirnseiten/den Enden der Kolbenlaufbahn an der Oberseite der Dosierplatte 5 her, die an die Anfangsplatte 3 anschließt und deren erstes Füllstück 25 die erste Vertiefung 47 der Anfangsplatte 3 ausfüllt.

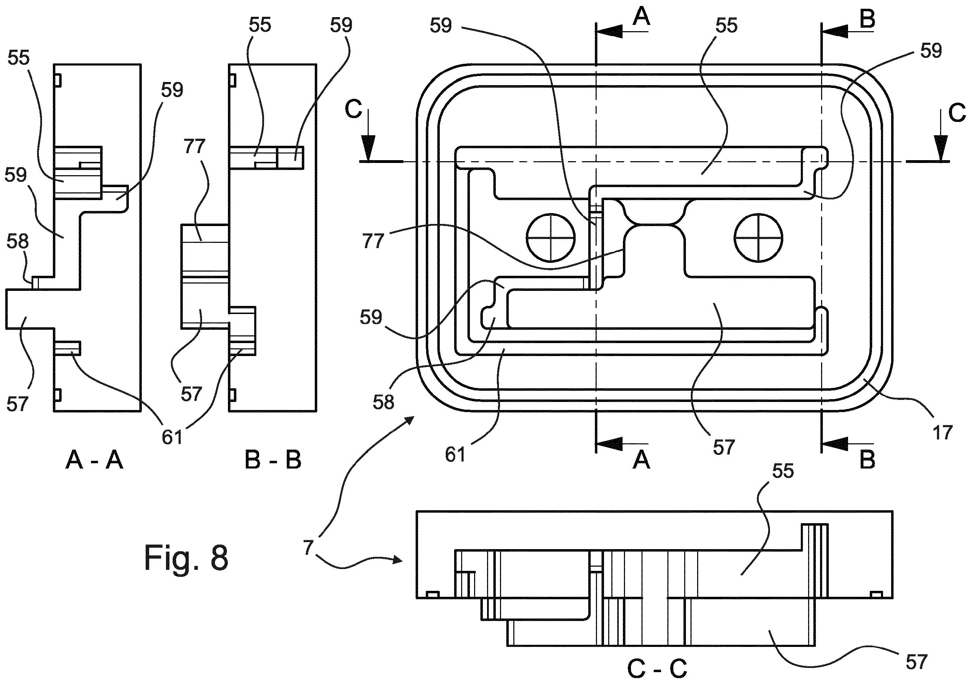

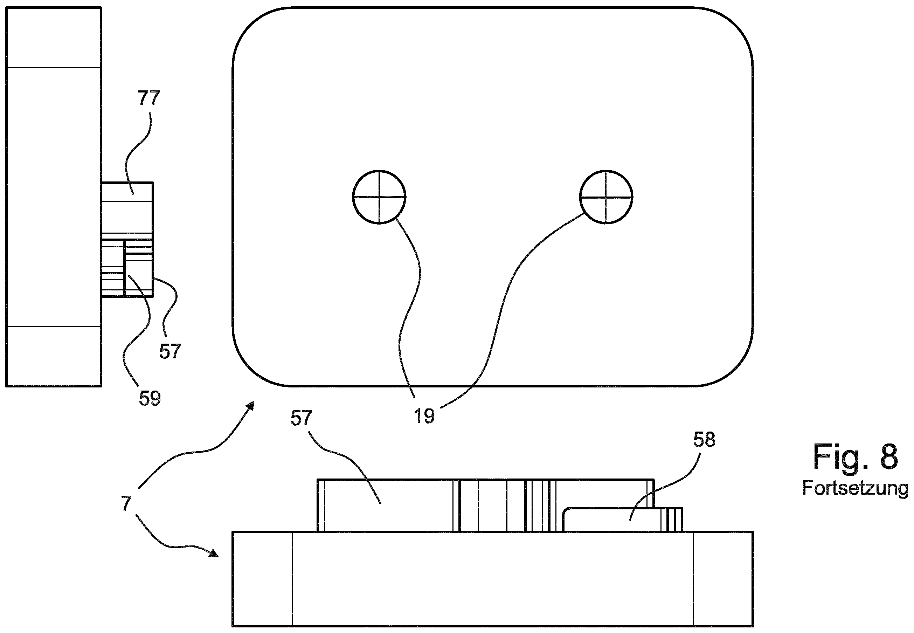

In der Figur 8 ist die Endscheibe 7 in verschiedenen Ansichten dargestellt. Anhand dieser Darstellung soll vor allem der Verlauf der Nuten 59 und 61, welche die Umsteuerkanäle des erfindungsgemäßen Progressivverteilers 1 bilden, verdeutlicht werden.

Die Nut 59 beginnt an dem in der Figur 8 rechten Ende der zweiten Vertiefung 55. Wie sich aus dem Schnitt entlang der Linie A-A der Figur 8 ergibt, ist die Nut 59 tiefer als die zweite Vertiefung 55. Dadurch ist gewährleistet, dass, auch wenn ein zweites Füllstück 45 einer Dosierplatte 5 die zweite Vertiefung 55 der Endplatte 7 ausfüllt, der Umsteuerkanal offen ist, so dass Schmiermittel durch den überwiegend von der Nut 59 gebildeten ersten Umsteuerkanal gefördert werden kann.

Der gleiche Sachverhalt ergibt sich auch aus dem Schnitt B-B der Figur 8.

In dem Schnitt A-A ist der Absatz 58 dargestellt. In dem Teil der Endplatte 7, der sich in der Figur 8 links der Schnittebenen A-A befindet, begrenzt der Absatz 58 einen Teil des im Wesentlichen von der Nut 59 gebildeten ersten Umsteuerkanals. Die Nut 59 stellt eine hydraulische Verbindung zwischen einem Ende einer zweiten Kavität 43 an der Unterseite einer Dosierplatte mit dem gegenüberliegenden Ende der ersten Kavität 23 auf der Oberseite der gleichen Dosierplatte 5 her. In der Ansicht von oben der Figur 8 verbindet die Nut 59 das rechte Ende einer zweiten Kavität 43 an der Unterseite einer Dosierplatte mit dem linken Ende der ersten Kavität 23 auf der Oberseite der gleichen Dosierplatte 5.

In den Schnitten A-A und B-B ist auch die Nut 61, welche einen zweiten Umsteuerkanal bildet, zu erkennen. Die zweite Nut 61 stellt eine hydraulische Verbindung zwischen einer zweiten Kavität 43 an der Unterseite einer Dosierplatte mit der ersten Kavität 23 auf der Oberseite der gleichen Dosierplatte 5 her. In der Ansicht von oben der Figur 8 verbindet die Nut 61 das linke Ende einer zweiten Kavität 43 an der Unterseite einer Dosierplatte mit dem rechten Ende der ersten Kavität 23 auf der Oberseite der gleichen Dosierplatte **5.** Wie bereits erwähnt, haben die Nuten 59 und 61 die Funktion von Umsteuerkanälen.

Anhand der Schnitte A-A und B-B ist auch gut zu erkennen, dass die Nuten 59 und 61 auf zwei verschiedenen Ebenen oder Niveaus verlaufen und sich unter anderem deshalb nicht kreuzen.

Das vierte Füllstück 57 umfasst einen Vorsprung 77, der die Tasche 29 der zweiten Kavität 43 an der Unterseite einer Dosierplatte 5 ausfüllt. Der Vorsprung 77 verschließt den Durchbruch 73 der letzten Dosierplatte 5.

Anders ausgedrückt: Der durch die Durchbrüche 73 in der Anfangsplatte 3 und der oder den Dosierplatten 5 gebildete Schmiermittelversorgungskanal endet an dem Vorsprung 77.

Bei allen Kavitäten 23, 43 sowie Vertiefungen 47 und 55 sind die Enden stets so ausgebildet, dass ein Anschlag für die Dosierkolben 63 gebildet wird, gleichzeitig aber ein "hydraulisches Kleben" des Dosierkolbens 63 an diesem Anschlag verhindert wird. Letzteres wird dadurch erreicht, dass eine Teilfläche der Kolbenlaufbahn für das Schmiermittel erreichbar ist, so dass sich der Dosierkolben 63 von seinem Anschlag wegbewegt, wenn der Druck des Schmiermittels ausreichend hoch ist.

Die Funktion des erfindungsgemäßen Progressivverteilers 1 wird nachfolgend anhand der Figuren 9 bis 13 erläutert. Dabei stellt sich das Problem, eine dreidimensionale Führung der Kanäle und Nuten sowohl in der Anfangsplatte 3, den Dosierplatten 5 und der Endplatte 7 in einer zweidimensionalen Zeichnung darzustellen. Die Figuren 9 bis 14 sind keine exakten Zeichnungen, sondern teilweise schematische Darstellungen, die es dem Fachmann erlaubt, die Funktionsweise des erfindungsgemäßen Progressivverteilers 1 nachzuvollziehen.

In den Figuren 9 bis 13 ist jeweils ein Progressivverteiler 1 mit einer Anfangsplatte 3, zwei Dosierplatten 5 und einer Endplatte 7 schematisch dargestellt. In der linken Hälfte der Figuren 9 ff sind die unteren Kolbenebenen, das heißt die Unterseiten der Dosierplatten 5 dargestellt. In der rechten Hälfte der Figuren 9 ff sind die oberen Kolbenebenen, das heißt die Oberseiten der Dosierplatten 5, dargestellt.

Die Bezugszeichen aus den Figuren 1 bis 8 wurden übernommen, sofern es der Verständlichkeit der Zeichnung dient. Allerdings wurden nicht alle Bezugszeichen eingetragen.

Die Anfangsplatte 3 und die Endplatte 7 bzw**.** die zu ihr gehörenden Nuten und Kanäle sind sowohl in der linken Hälfte als auch in der rechten Hälfte der Figuren 9 ff dargestellt.

In der Mitte des Progressivverteilers befindet sich die durch mehrere hintereinander angeordnete Durchbrüche 73 gebildete zentrale Schmiermittelversorgung. Sie wird über den Anschluss 9 bei Bedarf oder zeitgesteuert mit unter Druck stehendem Schmiermittel versorgt und ist sowohl in der linken als auch der rechten Hälfe der Figuren 9 bis 13 dargestellt, obwohl es sich um ein und dieselben Durchbrüche 73 handelt.

Wenn man den linken Teil der Figur 9 betrachtet, der die Unterseite mit der untere Kolbenebene der Dosierplatten 5 darstellt, dann ist in den zweiten Kavitäten 43 der Dosierplatten 5 jeweils ein Dosierkolben 63 vorhanden. Diese beiden Dosierkolben 63 befinden sich an ihrem (in der Figur 9) linken Endanschlag.

Wenn man den rechten Teil der Figur 9 betrachtet, der die Oberseiten mit der oberen Kolbenebene der Dosierplatten 5 darstellt, dann ist in den ersten Kavitäten 23 der Dosierplatten 5 jeweils ein Dosierkolben 63 vorhanden. Auch diese Dosierkolben 63 befinden sich an ihrem (in der Figur 9) linken Endanschlag.

Wenn die Dosierkolben 63 an ihrem "linken" Endanschlag anliegen, dann besteht eine hydraulische Verbindung zwischen dem Durchbruch 73 sowie der rechten Steuernut 65 des Dosierkolbens 63 mit der Durchgangsöffnung 67.1. Diese Verbindung besteht auch, wenn die rechte Steuernut 65 des Dosierkolbens 63 nur einen Teil des Durchbruchs 73 freigibt. Die Durchgangsöffnung 67.2 ist verschlossen.

Die Durchgangsöffnungen 67.1 und 67.2 münden in einen Kanal oder eine Sammelleitung, die durch den Absatz 37 an dem ersten Füllstück 25 der in der Figur 9 unteren Dosierplatte 5 begrenzt wird. Das erste Füllstück 25 der unteren Dosierplatte, ragt in die zweite Kavität 43 an der Unterseite der in Figur 9 oberen Dosierplatte 5. In den Figuren 2 und 6 ist dieser Absatz 37 im Detail dargestellt.

In einer zweiten Kavität 43 in Figur 9 unter Dosierplatte 5 ist ein weiterer Dosierkolben 63 angeordnet.

In die zweite Kavität 43 der unteren Dosierplatte 5 ragt das vierte Füllstück 57 der Endplatte 7 (siehe auch die Figuren 4 und 8). Die Nuten 59 und 61 in der Endplatte 7, welche die Umsteuerkanäle des Progressivverteilers 1 bilden, stellen, wie bereits oben erläutert, die Verbindung zwischen der Unterseite der (in Figur 9 unteren) Dosierplatte 5 und der Oberseite der gleichen Dosierplatte 5 her.

Die bei der Beschreibung der Funktionsweise im Zusammenhang mit den Figuren 9 bis 13 verwandten Angaben "rechts", "links", "oben" und "unten" sind keine absoluten Angaben, sondern sind im Zusammenhang mit den Figuren zu verstehen und sollen die Orientierung innerhalb der Figuren erleichtern.

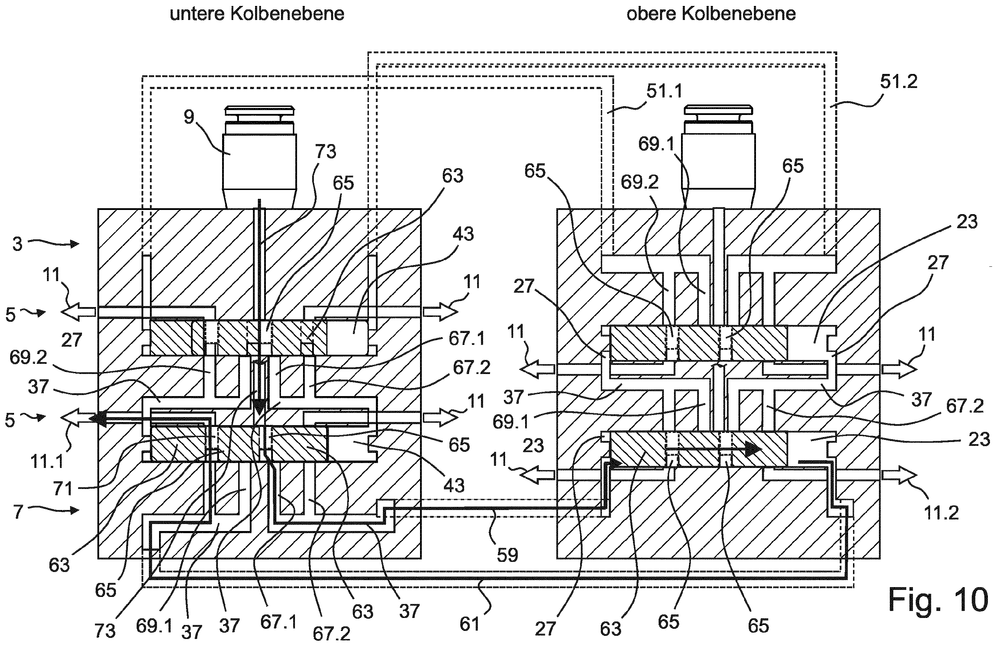

Anhand der Figuren 10 bis 13 wird nun die Funktionsweise des Progressivverteilers 1 erläutert.

Wenn das in den Durchbrüchen 73 vorhandene Schmiermittel von einer nicht dargestellten Pumpe mit Druck beaufschlagt wird, dann gelangt das Schmiermittel aus der zweiten Kavität 43 der unteren Dosierplatte 5 über die rechte Steuernut 65 des Dosierkolbens 63 über die Durchgangsöffnung 67.1 in die Nut 59 der Endplatte 7.

Weil die Dosierkolben 63 in den zweiten Kavitäten 43 beider Dosierplatten 5 bereits an ihren linken Anschlägen anliegen, bleiben diese Dosierkolben 63 in ihren Positionen.

Über die Nut 59 gelangt das unter Druck stehende Schmiermittel in die erste Kavität 23 (an der Oberseite in Figur 10 unteren) Dosierplatte **5.** Dort beaufschlagt das unter Druck stehende Schmiermittel über die Erweiterung 27 die Stirnfläche des Dosierkolbens 63. In Folge dessen bewegt sich dieser Dosierkolben 63 ausgehend von der in Figur 10 dargestellten Position nach rechts und fördert das in der ersten Kavität 23 (rechts des Dosierkolbens 63) befindliche Schmiermittel in die Nut 61. Von dort gelangt das Schmiermittel über die Durchgangsöffnung 69.2 und die linke Steuernut 65 des Dosierkolbens 63 über den Durchbruch 71 in den Auslass 11.1. Von dort gelangt das Schmiermittel in an sich bekannter Weise zu der Schmierstelle, die geschmiert werden soll. Der Weg des Schmiermittels ist in der Figur 10 durch Pfeile angedeutet.

Die hydraulische Verbindung von der Steuernut 65 des Dosierkolbens 63 zu dem Auslass 11 ist deshalb vorhanden, weil die Durchbrüche 71 (siehe Figur 6) der Auslässe 11 nicht in deren Mitte angeordnet sind; sie sind vielmehr so positioniert, dass sie in der dargestellten Position des Dosierkolbens mit der linken Steuernut 65 des Dosierkolbens 63 fluchten.

Am Ende dieses Schmiervorgangs befindet sich der Dosierkolben 63 in der ersten Kavität 23 in der (in den Figuren 9 ff unteren) Dosierplatte 5 an seinem "rechten" Anschlag.

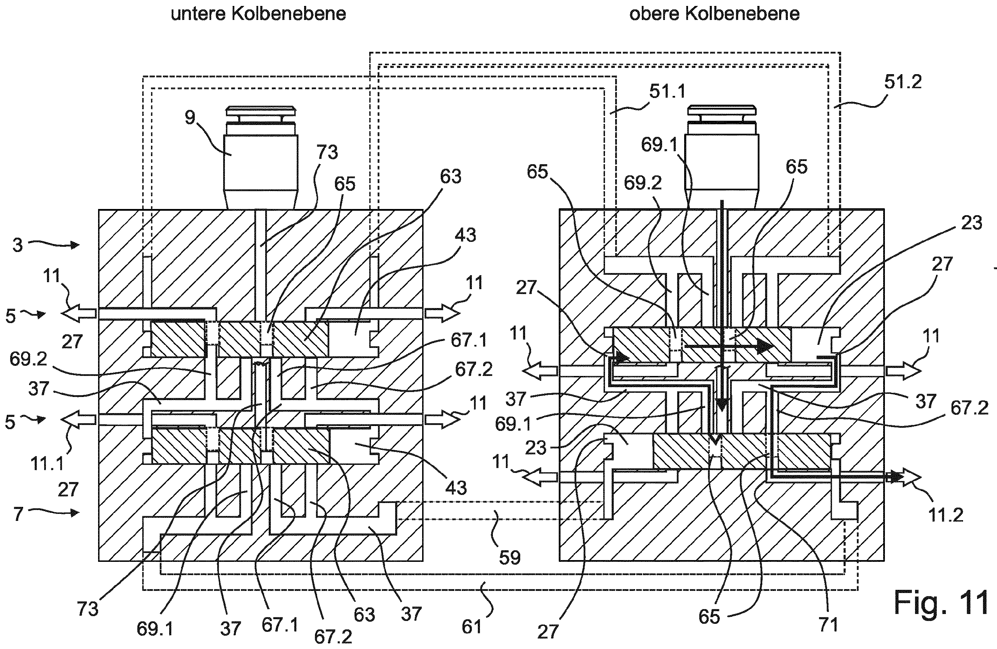

Diese Position ist in der Figur 11 dargestellt. In dieser Position stellt die linke Steuernut 65 dieses Dosierkolbens 63 über die Durchgangsöffnung 69.1, den durch den Absatz 37 begrenzten Kanal und die Erweiterung 27 eine hydraulische Verbindung zur ersten Kavität 23 der in der Figur 11 oberen Dosierplatte 5 her. In Folge dessen bewegt sich der in dieser Kavität 23 befindliche Dosierkolben 63 nach rechts und fördert das (in Figur 11 rechts von ihm) in der ersten Kavität 23 befindliche Schmiermittel über die Erweiterung 27, den durch den Absatz 37 begrenzten Kanal, die Durchgangsöffnung 67.2, die rechte Steuernut 65 des Dosierkolbens 63, der sich in der ersten Kavität 23 der in Figur 11 unteren Dosierplatte 5 befindet, den Durchbruch 71 in den Auslass 11.2. Auch in der Figur 11 ist der Weg des Schmiermittels durch den Progressivverteiler 1 durch Pfeile veranschaulicht.

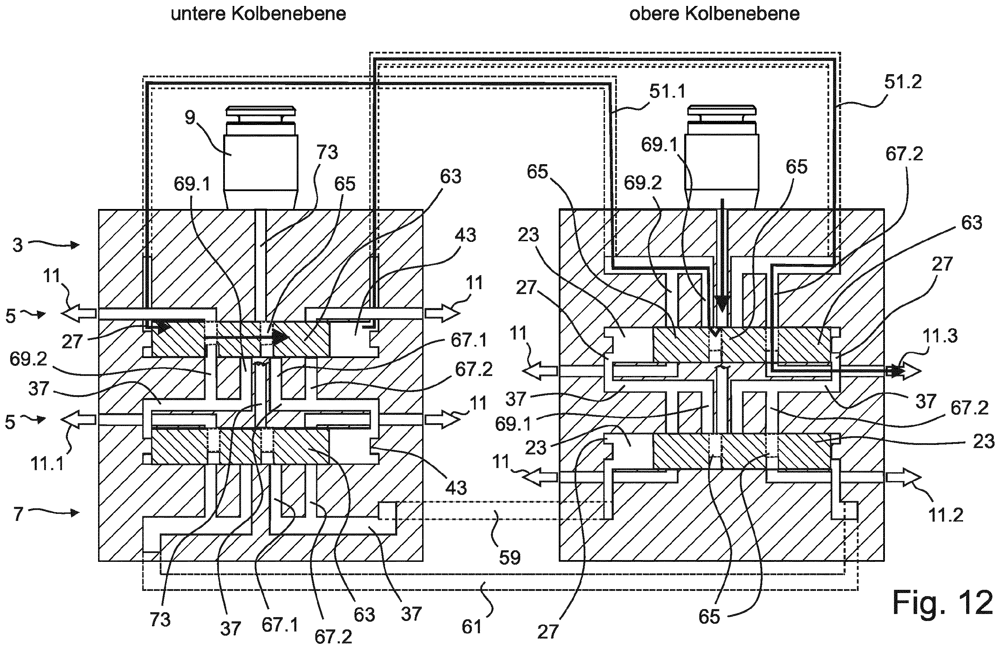

Am Ende dieses zweiten Schmiervorgangs befinden sich beide Dosierkolben 63 in den ersten Kavitäten beider Dosierplatten 5 in Anlage an ihren "rechten" Anschlägen (siehe Figur 12).

Wenn sich die insgesamt vier Dosierkolben 63 in den in Figur 12 dargestellten Positionen befinden, dann gelangt das unter Druck stehende Schmiermittel aus dem Durchbruch 73 über die linke Steuernut 65 des Dosierkolbens 63 in der ersten Kavität 23 der (in Figur 12 oberen) Dosierplatte 5, die Durchgangsöffnung 69.1 und die Nut 51.1 der Anfangsplatte 3 zu dem entgegengesetzten Ende der zweiten Kavität 43 an der Unterseite der (in Figur 12 oberen) Dosierplatte 5. Dieser Wechsel von der Oberseite der oberen Dosierplatte 5 zu deren Unterseite geht in der schematischen Darstellung der Figur 12 durch den Wechsel von der rechten Hälfte zur linken Hälfe der Figur 12 einher.

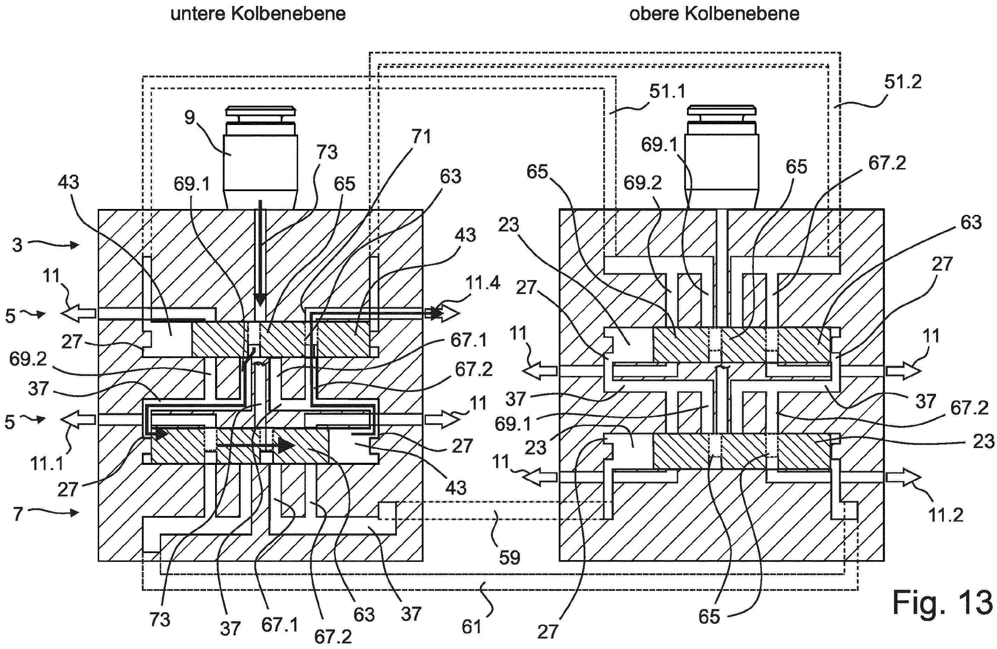

Das unter Druck stehende Schmiermittel bewegt den in dieser Kavität befindlichen Dosierkolben 63 nach rechts. In Folge fördert der Dosierkolben 63 das (in Figur 12) rechts von ihm in der zweiten Kavität 43 befindliche Schmiermittel in die Nut 51.2 in der Anfangsplatte 3. Von dort gelangt das Schmiermittel über die Durchgangsöffnung 67.2, die rechte Steuernut 65 des Dosierkolbens 63, der sich in der ersten Kavität 23 der (oberen) Dosierplatte 5 befindet, und einen Durchbruch 71 in den Auslass 11.3. Am Ende des dritten Schmiervorgangs befinden sich die Dosierkolben 63 in den in Figur 13 dargestellten Positionen. Drei der vier Dosierkolben 63 befinden sich in Anlage an ihren rechten Anschlägen in den Kavitäten 23, bzw. 43. Auch in der Figur 12 ist der Weg des Schmiermittels durch den Progressivverteiler 1 durch Pfeile veranschaulicht.

Wenn sich die insgesamt vier Dosierkolben 63 in den in Figur 13 dargestellten Positionen befinden, dann gelangt das unter Druck stehende Schmiermittel aus dem Durchbruch 73 über die linke Steuernut 65 des Dosierkolbens 63 in die zweite Kavität 43 der (in der Figur 13 oberen) Dosierplatte 5, der Durchgangsöffnung 69.1, den von dem Absatz 37 begrenzten Kanal und die Erweiterung 27 der zweiten Kavität 43 der unteren Dosierplatte **5.** In Folge der Beaufschlagung des in dieser zweiten Kavität 43 befindlichen Dosierkolbens 63 bewegt sich dieser von seiner in Figur 13 dargestellten Ausgangsposition nach rechts und verdrängt das rechts von dem Dosierkolben 63 in der zweiten Kavität 43 befindliche Schmiermittel.

Das Schmiermittel gelangt über die (in der Figur 13 rechte) Erweiterung 27, den von dem Absatz 37 begrenzten Kanal, die Durchgangsöffnung 67.2, die rechte Steuernut 65 des Dosierkolbens 63 in der zweiten Kavität in der oberen Dosierplatte 5 und die Durchgangsöffnung 71 in den Auslass 11.4.

Nach Beendigung dieses Schmiervorgangs, befinden sich alle vier Dosierkolben 63 in Anlage an ihren rechten Anschlägen. Damit ist der erste Durchlauf abgeschlossen.

Anschließend beginnt der zweite Durchlauf in dem nacheinander die vier Dosierkolben in die in der Figur 9 und 10 dargestellte Position bewegt werden. Dieser zweite Durchlauf ist analog zu dem ersten Durchlauf, der anhand der Figuren 10 bis 13 ausführlich erläutert wurde. Daher wird der zweite Durchlauf nicht ausführlich erläutert.

In der Figur 11 ist nun der nächste Schritt dargestellt, wenn nämlich der Dosierkolben 63 in der ersten Kavität 23 der unteren Dosierplatte 5 seine Endposition erreicht hat, indem er seine "rechte" Endposition erreicht hat. Dann ist eine hydraulische Verbindung zwischen dem Durchbruch 73 und der Durchgangsöffnung 69.1 mit einem Umweg über die linke Steuernut des Dosierkolbens 63 gewährleistet. Über den Absatz 37 des zweiten Füllstücks der oberen Dosierplatte 5 wird auch hier wieder eine Verbindung zu der ersten Kavität der oberen Dosierplatte 5 hergestellt. Der dort befindliche Dosierkolben 63 hat seine linke Endposition inne und bewegt sich aufgrund der Druckbeaufschlagung durch das Schmiermittel von links nach rechts, wie es in der Figur 11 durch einen Pfeil angedeutet ist. Infolgedessen wird das im rechten Teil der ersten Kavität 23 befindliche Schmiermittel über den Absatz 37, die Durchgangsöffnung 67.2, die rechte Steuernut 65 des Dosierkolbens 63 in der ersten Kavität 23 der unteren Dosierplatte 5 zu dem Auslass 11.2 gefördert.

In der Figur 12 ist die Situation dargestellt, dass beide Dosierkolben 63 in der oberen Kolbenebene ihre "rechte" Endposition eingenommen haben. Infolgedessen wird nun über die linke Steuernut 65 des Dosierkolbens 63 in der oberen Dosierplatte 5 analog zur Figur 11 das Schmiermittel über die Durchgangsöffnung 69.1, den Absatz 37 in die Nut 51.1 der Anfangsplatte 3 umgeleitet. Diese Nut 51.1 bewirkt, dass die Stirnseite des Dosierkolbens 63 der oberen Dosierplatte 5 in der unteren Kolbenebene mit Druck beaufschlagt wird und infolgedessen dieser Kolben, wie in der Figur 12 durch einen Pfeil angedeutet, sich von seiner linken Endposition nach rechts bewegt. Dabei wird das in der zweiten Kavität 43 rechts des Dosierkolbens 63 befindliche Schmiermittel über die Nut 51.2 ausgeschoben und gelangt über die Durchgangsöffnung 67.2, die rechte Steuernut 65 des Dosierkolbens 63 und den entsprechenden Durchbruch 71, zu dem Auslass 11.3. Nachdem diese Förderbewegung des Dosierkolbens 63 abgeschlossen ist, befindet sich der Kolben 63 in der unteren Kavität 43 der oberen Dosierplatte 5 in der in Figur 13 dargestellten rechten Endposition. Infolgedessen ist eine Verbindung zwischen dem Durchbruch 73, der linken Steuernut 65 des Dosierkolbens 63, der Durchgangsöffnung 69.1, dem Absatz 37 zu der unteren Kavität 43 der unteren Dosierplatte 5 geöffnet. Infolgedessen bewegt sich der letzte in der linken Endposition befindliche Dosierkolben 63 nach rechts, wie dies in der Figur 13 durch einen Pfeil angedeutet ist. Dadurch gelangt der Schmierstoff, der sich rechts des Dosierkolbens 63 befindet, in an sich bekannter Weise über den Absatz 37, die Durchgangsöffnung 67.2, die rechte Steuernut 65 des Dosierkolbens in der oberen Dosierplatte zu dem Ausgang 11.4.

Wenn nun auch dieser vierte Dosierkolben 63 die rechte Endposition erreicht hat, dann ist ein Durchlauf abgeschlossen und der Vorgang wiederholt sich nur in umgekehrter Reihenfolge. Dann bewegen sich nacheinander die Dosierkolben 63 von der rechten Endposition in Richtung der linken Endposition. Dieses Umschalten der Bewegungsrichtungen von Dosierkolben bei Progressivverteilern ist dem Fachmann bekannt und wird daher nicht im Detail erläutert.

### Bezugszeichenliste:

1 Progressivverteiler
3 Anfangsplatte
5 Dosierplatte
7 Endplatte
9 Anschluss Schmiermittelversorgung
11 Auslass
13 Spannschraube
15 Mutter
17 Nut
19 Durchgangsbohrung erste Kavität
25 erstes Füllstück
27 Erweiterung
29 Tasche (der ersten Kavität)
31 Mittellinie
33 Verlängerung
35 Vorsprung
37 Absatz
39 Steg
41 Zwischenfläche/Absatz
43 zweite Kavität
45 zweites Füllstück
47 erste Vertiefung
49 drittes Füllstück
51 Nuten
55 zweite Vertiefung
57 viertes Füllstück
58 Absatz
59, 61 Nuten (Umsteuerkanäle)
63 Dosierkolben
65 Steuernut
67, 67.1, 67.2 Durchgangsöffnung
69, 69.1, 69.2 Durchgangsöffnung
71 Durchbruch (Verbindung zwischen Kolbenlaufbahn und Auslass)
73 Durchbruch (Druckleitung/Schmiermittelversorgung)
75 Tasche der ersten Vertiefung
77 Vorsprung

## Patentansprüche

1. Progressivverteiler für Schmiermittel in Scheibenbauweise mit einer Anfangsplatte (3), einer Endplatte (7) und mit mindestens einer zwischen Anfangsplatte (3) und Endplatte (7) angeordneten Dosierplatte (5),
wobei an einer Oberseite der Dosierplatte (5) eine erste Kavität (23) für einen ersten Dosierkolben (63) und ein erstes Füllstück (25) ausgebildet sind,
wobei an einer Unterseite der Dosierplatte (5) eine zweite Kavität (43) für einen zweiten Dosierkolben (63) und ein zweites Füllstück (45) ausgebildet sind,
wobei an einer Unterseite der Anfangsplatte (3) eine erste Vertiefung (47) sowie ein drittes Füllstück (49) ausgebildet sind, und
wobei an einer Oberseite der Endplatte (7) ein viertes Füllstück (57) und eine zweite Vertiefung (55) ausgebildet sind.

2. Progressivverteiler nach Anspruch 1, **dadurch gekennzeichnet, dass** das erste Füllstück (25) einer Dosierplatte (5) in die zweite Kavität (43) einer benachbarten Dosierplatte (5) eintaucht und zusammen mit der zweiten Kavität (43) eine (Kolben-)Laufbahn für den zweiten Dosierkoben (63) der benachbarten Dosierplatte (5) begrenzt.

3. Progressivverteiler nach Anspruch 1 oder 2, **dadurch gekennzeichnet, dass** das zweite Füllstück (45) einer Dosierplatte (5) in die erste Kavität (23) einer benachbarten Dosierplatte (5) eintaucht und zusammen mit der ersten Kavität (23) eine Laufbahn für einen Dosierkolben (63) begrenzt.

4. Progressivverteiler nach einem der vorhergehenden Ansprüche, **dadurch gekennzeichnet, dass** das erste Füllstück (25) einer Dosierplatte (5) in die erste Vertiefung (47) der Anfangsplatte (3) eintaucht, und dass das dritte Füllstück (49) der Anfangsplatte (3) in die erste Kavität (23) einer benachbarten Dosierplatte (5) eintaucht und zusammen mit der ersten Kavität (23) eine Laufbahn für einen Dosierkolben (63) bildet/begrenzt.

5. Progressivverteiler nach einem der vorhergehenden Ansprüche, **dadurch gekennzeichnet, dass** das vierte Füllstück (57) der Endplatte (7) in die zweite Kavität (43) einer benachbarten Dosierplatte (5) eintaucht und zusammen mit der zweiten Kavität (43) der Dosierplatte (5) eine Laufbahn für einen Dosierkolben (63) begrenzt.

6. Progressivverteiler nach einem der vorhergehenden Ansprüche, **dadurch gekennzeichnet, dass** die Laufbahnen der Dosierkolben (63) an beiden Enden mit jeweils einem Auslass (11) verbunden sind.

7. Progressivverteiler nach einem der vorhergehenden Ansprüche, **dadurch gekennzeichnet, dass** die Dosierkolben (63) eine oder zwei Steuernuten (65) umfassen.

8. Progressivverteiler nach einem der vorhergehenden Ansprüche, **dadurch gekennzeichnet, dass** die Dosierkolben (63) und die Kolbenlaufbahnen einen quadratischen, dreieckigen oder polygonalen Querschnitt haben.

9. Progressivverteiler nach einem der vorhergehenden Ansprüche, **dadurch gekennzeichnet, dass** die erste Kavität (23) und die zweite Kavität (43) einer Dosierplatte (5) eine rechteckige Grundform haben an deren Enden jeweils eine Erweiterung (27) ausgebildet ist, dass die erste Kavität (23) und die zweite Kavität (43) eine Tasche (29) aufweisen, dass das erste Füllstück (25) und das zweite Füllstück (45) der Dosierplatte (5) eine rechteckige Grundform haben an deren Enden jeweils eine Verlängerung (33) ausgebildet ist, und dass das erste Füllstück (25) und das zweite Füllstück (45) zwei seitliche Absätze (37) aufweisen, die durch einen Steg (39) getrennt sind.

10. Progressivverteiler nach Anspruch 9, **dadurch gekennzeichnet, dass** eine Höhe der Füllstücke (25, 45) im Bereich der Absätze (37) reduziert ist.

11. Progressivverteiler nach einem der vorhergehenden Ansprüche, **dadurch gekennzeichnet, dass** die Anfangsplatte (5) einen Anschluss (9) für eine Versorgungsleitung aufweist.

12. Progressivverteiler nach einem der vorhergehenden Ansprüche, **dadurch gekennzeichnet, dass** in der Anfangsplatte (3) zwei Kanäle (51) ausgebildet sind.

13. Progressivverteiler nach einem der vorhergehenden Ansprüche, **dadurch gekennzeichnet, dass** in der Endplatte (7) zwei Umsteuerkanäle (59, 61) ausgebildet sind.

14. Progressivverteiler nach einem der vorhergehenden Ansprüche, **dadurch gekennzeichnet, dass** die Kavitäten (23, 43) in der oder den Dosierplatten (5) und die Vertiefungen (47, 55) in der Anfangsplatte (3) beziehungsweise der Endplatte (7) prismatisch der pyramidenförmig sind.

15. Progressivverteiler nach einem der vorhergehenden Ansprüche, **dadurch gekennzeichnet, dass** jede Dosierplatte (5) mindestens einen Auslass (11, 111, 112, 113, 114) aufweist.

16. Progressivverteiler nach einem der vorhergehenden Ansprüche, **dadurch gekennzeichnet, dass** die Anfangsplatte (3), die mindestens eine Dosierplatte (5) und die Endplatte (7) eine oder mehrere Durchgangsbohrungen (19) aufweisen.

17. Progressivverteiler nach einem der vorhergehenden Ansprüche, **dadurch gekennzeichnet, dass** die Anfangsplatte (3), die Dosierplatten (5), die Endplatten (7) und/oder die Dosierkolben (63) aus Kunststoff, bevorzugt aus einem Bulk Moulding Compound (BMC), bestehen und bevorzugt durch Heißpressen oder Spritzgießen hergestellt sind.

## Claims

1. Progressive distributor for lubricants in disc design comprising a starting plate (3), an end plate (7) and at least one metering plate (5) arranged between the starting plate (3) and the end plate (7),
wherein a first cavity (23) for a first metering piston (63) and a first filler piece (25) are formed on an upper side of the metering plate (5),
wherein a second cavity (43) for a second metering piston (63) and a second filler piece (45) are formed on an underside of the metering plate (5),
wherein a first recess (47) and a third filler piece (49) are formed on an underside of the starting plate (3), and
wherein a fourth filler piece (57) and a second recess (55) are formed on an upper side of the end plate (7).

2. Progressive distributor according to claim 1, **characterized in that** the first filler piece (25) of a metering plate (5) dips into the second cavity (43) of an adjacent metering plate (5) and, together with the second cavity (43), delimits a (piston) track for the second metering piston (63) of the adjacent metering plate (5).

3. Progressive distributor according to claim 1 or 2, **characterized in that** the second filler piece (45) of a metering plate (5) dips into the first cavity (23) of an adjacent metering plate (5) and, together with the first cavity (23), delimits a track for a metering piston (63).

4. Progressive distributor according to any of the preceding claims,
**characterized in that** the first filler piece (25) of a metering plate (5) dips into the first recess (47) of the starting plate (3)**,and in that** the third filler piece (49) of the starting plate (3) dips into the first cavity (23) of an adjacent metering plate (5) and, together with the first cavity (23), forms/delimits a track for a metering piston (63).

5. Progressive distributor according to any of the preceding claims,
**characterized in that** the fourth filler piece (57) of the end plate (7) dips into the second cavity (43) of an adjacent metering plate (5) and, together with the second cavity (43) of the metering plate (5), delimits a track for a metering piston (63).

6. Progressive distributor according to any of the preceding claims,
**characterized in that** the tracks of the metering pistons (63) are connected at both ends to an outlet (11) in each case.

7. Progressive distributor according to any of the preceding claims,
**characterized in that** the metering pistons (63) comprise one or two control grooves (65).

8. Progressive distributor according to any of the preceding claims,
**characterized in that** the metering pistons (63) and the piston tracks have a square, triangular or polygonal cross-section.

9. Progressive distributor according to any of the preceding claims,
**characterized in that** the first cavity (23) and the second cavity (43) of a metering plate (5) have a rectangular basic shape at each end of which an enlargement region (27) is formed, **in that** the first cavity (23) and the second cavity (43) have a pocket (29), **in that** the first filler piece (25) and the second filler piece (45) of the metering plate (5) have a rectangular basic shape at each end of which an extension piece (33) is formed, **and in that** the first filler piece (25) and the second filler piece (45) have two lateral shoulders (37) which are separated by a projection (39).

10. Progressive distributor according to claim 9, **characterized in that** a height of the filler pieces (25, 45) is reduced in the region of the shoulders (37).

11. Progressive distributor according to any of the preceding claims,
**characterized in that** the starting plate (5) has a connection (9) for a supply line.

12. Progressive distributor according to any of the preceding claims,
**characterized in that** two channels (51) are formed in the starting plate (3).

13. Progressive distributor according to any of the preceding claims,
**characterized in that** two reversing channels (59, 61) are formed in the end plate (7).

14. Progressive distributor according to any of the preceding claims,
**characterized in that** the cavities (23, 43) in the metering plate(s) (5) and the recesses (47, 55) in the starting plate (3) or the end plate (7) are prismatic or pyramid-shaped.

15. Progressive distributor according to any of the preceding claims,
**characterized in that** each metering plate (5) has at least one outlet (11, 111, 112, 113, 114).

16. Progressive distributor according to any of the preceding claims,
**characterized in that** the starting plate (3), the at least one metering plate (5) and the end plate (7) have one or more through holes (19).

17. Progressive distributor according to any of the preceding claims,
**characterized in that** the starting plate (3), the metering plates (5), the end plates (7) and/or the metering pistons (63) are made of plastics material, preferably a bulk molding compound (BMC), and are preferably produced by hot pressing or injection molding.

## Revendications

1. Distributeur progressif pour du lubrifiant de type disque avec une plaque initiale (3), une plaque finale (7) et avec au moins une plaque de dosage (5) disposée entre la plaque initiale (3) et la plaque finale (7),
dans lequel une première cavité (23) pour un premier piston de dosage (63) et une première pièce de remplissage (25) sont réalisées sur une face supérieure de la plaque de dosage (5),
dans lequel une deuxième cavité (43) pour un deuxième piston de dosage (63) et une deuxième pièce de remplissage (45) sont réalisées sur une face inférieure de la plaque de dosage (5),
dans lequel un premier évidement (47) et une troisième pièce de remplissage (49) sont réalisés sur une face inférieure de la plaque initiale (3), et
dans lequel une quatrième pièce de remplissage (57) et un deuxième évidement (55) sont réalisés sur une face supérieure de la plaque finale (7).

2. Distributeur progressif selon la revendication 1, **caractérisé en ce que** la première pièce de remplissage (25) d'une plaque de dosage (5) plonge dans la deuxième cavité (43) d'une plaque de dosage (5) voisine et délimite, avec la deuxième cavité (43), un chemin de roulement (de piston) pour le deuxième piston de dosage (63) de la plaque de dosage (5) voisine.

3. Distributeur progressif selon la revendication 1 ou 2, **caractérisé en ce que** la deuxième pièce de remplissage (45) d'une plaque de dosage (5) plonge dans la première cavité (23) d'une plaque de dosage (5) voisine et délimite, avec la première cavité (23), un chemin de roulement pour un piston de dosage (63).

4. Distributeur progressif selon l'une quelconque des revendications précédentes, **caractérisé en ce que** la première pièce de remplissage (25) d'une plaque de dosage (5) plonge dans le premier évidement (47) de la plaque initiale (3), et que la troisième pièce de remplissage (49) de la plaque initiale (3) plonge dans la première cavité (23) d'une plaque de dosage (5) voisine et forme/délimite, avec la première cavité (23), un chemin de roulement pour un piston de dosage (63).

5. Distributeur progressif selon l'une quelconque des revendications précédentes, **caractérisé en ce que** la quatrième pièce de remplissage (57) de la plaque finale (7) plonge dans la deuxième cavité (43) d'une plaque de dosage (5) voisine et délimite, avec la deuxième cavité (43) de la plaque de dosage (5), un chemin de roulement pour un piston de dosage (63).

6. Distributeur progressif selon l'une quelconque des revendications précédentes, **caractérisé en ce que** les chemins de roulement des pistons de dosage (63) sont reliés aux deux extrémités à respectivement une sortie (11).

7. Distributeur progressif selon l'une quelconque des revendications précédentes, **caractérisé en ce que** le piston de dosage (63) comprend une ou deux rainures de commande (65).

8. Distributeur progressif selon l'une quelconque des revendications précédentes, **caractérisé en ce que** les pistons de dosage (63) et les chemins de roulement de piston ont une section transversale carrée, triangulaire ou polygonale.

9. Distributeur progressif selon l'une quelconque des revendications précédentes, **caractérisé en ce que** la première cavité (23) et la deuxième cavité (43) d'une plaque de dosage (5) ont une forme de base rectangulaire aux extrémités de laquelle est réalisé respectivement un élargissement (27), que la première cavité (23) et la deuxième cavité (43) présentent une poche (29), que la première pièce de remplissage (25) et la deuxième pièce de remplissage (45) de la plaque de dosage (5) ont une forme de base rectangulaire aux extrémités de laquelle est réalisé respectivement un prolongement (33), et que la première pièce de remplissage (25) et la deuxième pièce de remplissage (45) présentent deux saillies (37) latérales qui sont séparées par une nervure (39).

10. Distributeur progressif selon la revendication 9, **caractérisé en ce qu'**une hauteur des pièces de remplissage (25, 45) est réduite dans la zone des saillies (37).

11. Distributeur progressif selon l'une quelconque des revendications précédentes, **caractérisé en ce que**
la plaque initiale (5) présente un raccordement (9) pour une conduite d'alimentation.

12. Distributeur progressif selon l'une quelconque des revendications précédentes, **caractérisé en ce que** deux canaux (51) sont réalisés dans la plaque initiale (3).

13. Distributeur progressif selon l'une quelconque des revendications précédentes, **caractérisé en ce que** deux canaux de changement de direction (59, 61) sont réalisés dans la plaque finale (7).

14. Distributeur progressif selon l'une quelconque des revendications précédentes, **caractérisé en ce que** les cavités (23, 43) dans la ou les plaques de dosage (5) et les évidements (47, 55) dans la plaque initiale (3) ou la plaque finale (7) sont prismatiques ou pyramidaux.

15. Distributeur progressif selon l'une quelconque des revendications précédentes, **caractérisé en ce que** chaque plaque de dosage (5) présente au moins une sortie (11, 111, 112, 113, 114).

16. Distributeur progressif selon l'une quelconque des revendications précédentes, **caractérisé en ce que** la plaque initiale (3), la au moins une plaque de dosage (5) et la plaque finale (7) présentent un ou plusieurs trous traversants (19).

17. Distributeur progressif selon l'une quelconque des revendications précédentes, **caractérisé en ce que** la plaque initiale (3), les plaques de dosage (5), les plaques finales (7) et/ou les pistons de dosage (63) sont en matière plastique, de préférence en un composé de moulage en vrac (BMC), et sont de préférence fabriqués par pressage à chaud ou par moulage par injection.
